# EUROPEAN PATENT APPLICATION

(11) **EP 4 203 381 A1**
(43) Date of publication of application: **28.06.2023**
(21) Application number: 22203284.9
(22) Date of filing: 24.10.2022
(51) Int. Cl.: H04L 9/32, H04L 9/40, H04W 12/108, G06F 9/50, G06F 9/54, H04L 9/00

(54) **METHODS AND APPARATUS FOR ATTESTATION FOR A CONSTELLATION OF EDGE DEVICES**

(30) Priority: 22.12.2021 US 202117560191
(71) Applicant: INTEL Corporation, Santa Clara, CA 95054 (US)
(72) Inventor: GUIM BERNAT, Francesc, 08036 Barcelona (ES); SMITH, Ned M., Beaverton, 97006 (US); DOSHI, Kshitij Arun, Tempe, 85282 (US); BAKSHI, Sanjay, Portland, 97231 (US); MCCAHILL, Benedict, Slane, C15ER24 (IE)
(74) Representative: Maiwald GmbH

(57) **Abstract**

Methods, apparatus, systems, and articles of manufacture for attestation for a constellation of edge devices are disclosed. An example first edge computing node includes at least one memory, instructions in the first edge computing node, and processor circuitry to execute the instructions to
record one or more timestamps corresponding to processing of event data from a first edge computing device, transmit the event data and the one or more timestamps to a second edge computing node, in response to the second edge computing node validating the event data based on the one or more timestamps and historical key performance indicators corresponding to the first edge computing node, validate the event data.

## Description

### FIELD OF THE DISCLOSURE

This disclosure relates generally to edge environments and, more particularly, to methods and apparatus for attestation for a constellation of edge devices.

### BACKGROUND

Edge environments (e.g., an Edge, Fog, multi-access edge computing (MEC), or Internet of Things (IoT) network) enable a workload execution (e.g., an execution of one or more computing tasks, an execution of a machine learning model using input data, etc.) near endpoint devices that request an execution of the workload. Edge environments may include infrastructure, such as an edge platform, that is connected to an edge cloud and/or data center cloud infrastructures, endpoint devices, or additional edge infrastructure via networks such as the Internet. Edge platforms may be closer in proximity to endpoint devices than public and/or private cloud infrastructure including servers in traditional data-center clouds.

### BRIEF DESCRIPTION OF THE DRAWINGS

FIG. 1 illustrates an overview of an edge cloud configuration for edge computing.
FIG. 2 illustrates operational layers among endpoints, an edge cloud, and cloud computing environments.
FIG. 3 illustrates an example approach for networking and services in an edge computing system.
FIG. 4A provides an overview of example components for compute deployed at a compute node in an edge computing system.
FIG. 4B provides a further overview of example components within a computing device in an edge computing system.
FIG. 5 is a block diagram of an example edge constellation that can be used to implement examples disclosed herein.
FIG. 6 illustrates an example block diagram of the edge constellation of FIG. 5.
FIG. 7 illustrates an example block diagram of the example data processing circuitry of FIG. 6.
FIG. 8 illustrates a block diagram of an example peer node.
FIGS. 9-11 are flowcharts representative of example machine readable instructions and/or example operations that may be executed by example processor circuitry to implement the edge constellation of FIGS. 5 and/or 6.
FIG. 12 is a block diagram of an example processing platform including processor circuitry structured to execute the example machine readable instructions and/or the example operations of FIGS. 9-11 to implement the example edge constellation of FIGS. 5 and/or 6.
FIG. 13 is a block diagram of an example implementation of the processor circuitry of FIG. 12.
FIG. 14 is a block diagram of another example implementation of the processor circuitry of FIG. 12.
FIG. 15 is a block diagram of an example software distribution platform (e.g., one or more servers) to distribute software (e.g., software corresponding to the example machine readable instructions of FIGS. 9-11) to client devices associated with end users and/or consumers (e.g., for license, sale, and/or use), retailers (e.g., for sale, re-sale, license, and/or sub-license), and/or original equipment manufacturers (OEMs) (e.g., for inclusion in products to be distributed to, for example, retailers and/or to other end users such as direct buy customers).

In general, the same reference numbers will be used throughout the drawing(s) and accompanying written description to refer to the same or like parts. The figures are not to scale. Instead, the thickness of the layers or regions may be enlarged in the drawings. Although the figures show layers and regions with clean lines and boundaries, some or all of these lines and/or boundaries may be idealized. In reality, the boundaries and/or lines may be unobservable, blended, and/or irregular. As used herein, unless otherwise stated, the term "above" describes the relationship of two parts relative to Earth. A first part is above a second part, if the second part has at least one part between Earth and the first part. Likewise, as used herein, a first part is "below" a second part when the first part is closer to the Earth than the second part. As noted above, a first part can be above or below a second part with one or more of: other parts therebetween, without other parts therebetween, with the first and second parts touching, or without the first and second parts being in direct contact with one another. Notwithstanding the foregoing, in the case of a semiconductor device, "above" is not with reference to Earth, but instead is with reference to a bulk region of a base semiconductor substrate (e.g., a semiconductor wafer) on which components of an integrated circuit are formed. Specifically, as used herein, a first component of an integrated circuit is "above" a second component when the first component is farther away from the bulk region of the semiconductor substrate than the second component. As used in this patent, stating that any part (e.g., a layer, film, area, region, or plate) is in any way on (e.g., positioned on, located on, disposed on, or formed on, etc.) another part, indicates that the referenced part is either in contact with the other part, or that the referenced part is above the other part with one or more intermediate part(s) located therebetween. As used herein, connection references (e.g., attached, coupled, connected, and joined) may include intermediate members between the elements referenced by the connection reference and/or relative movement between those elements unless otherwise indicated. As such, connection references do not necessarily infer that two elements are directly connected and/or in fixed relation to each other. As used herein, stating that any part is in "contact" with another part is defined to mean that there is no intermediate part between the two parts.

Unless specifically stated otherwise, descriptors such as "first," "second," "third," etc., are used herein without imputing or otherwise indicating any meaning of priority, physical order, arrangement in a list, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly that might, for example, otherwise share a same name. As used herein, "approximately" and "about" refer to dimensions that may not be exact due to manufacturing tolerances and/or other real world imperfections. As used herein "substantially real time" refers to occurrence in a near instantaneous manner recognizing there may be real world delays for computing time, transmission, etc. Thus, unless otherwise specified, "substantially real time" refers to real time +/- 1 second. As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events. As used herein, "processor circuitry" is defined to include (i) one or more special purpose electrical circuits structured to perform specific operation(s) and including one or more semiconductor-based logic devices (e.g., electrical hardware implemented by one or more transistors), and/or (ii) one or more general purpose semiconductor-based electrical circuits programmed with instructions to perform specific operations and including one or more semiconductor-based logic devices (e.g., electrical hardware implemented by one or more transistors). Examples of processor circuitry include programmed microprocessors, Field Programmable Gate Arrays (FPGAs) that may instantiate instructions, Central Processor Units (CPUs), Graphics Processor Units (GPUs), Digital Signal Processors (DSPs), XPUs, or microcontrollers and integrated circuits such as Application Specific Integrated Circuits (ASICs). For example, an XPU may be implemented by a heterogeneous computing system including multiple types of processor circuitry (e.g., one or more FPGAs, one or more CPUs, one or more GPUs, one or more DSPs, etc., and/or a combination thereof) and application programming interface(s) (API(s)) that may assign computing task(s) to whichever one(s) of the multiple types of the processing circuitry is/are best suited to execute the computing task(s).

### DETAILED DESCRIPTION

Edge computing, at a general level, refers to the transition of compute and storage resources closer to endpoint devices (e.g., consumer computing devices, user equipment, etc.) to optimize total cost of ownership, reduce application latency, improve service capabilities, and improve compliance with data privacy or security requirements. Edge computing may, in some scenarios, provide a cloud-like distributed service that offers orchestration and management for applications among many types of storage and compute resources. As a result, some implementations of edge computing have been referred to as the "edge cloud" or the "fog," as powerful computing resources previously available only in large remote data centers are moved closer to endpoints and made available for use by consumers at the "edge" of the network.

In some examples, attestation techniques (e.g., distributed ledger architectures) are used to generate trusted information that can be used and validated by third parties. For example, such attestation techniques may be implemented as contracts such as academic certificates from universities. In the example of edge deployments, fog and ambient computing, a large amount of information may be generated from a plurality of entities. In order for the information to be used, an end user should be able to trust the information. However, generating trustworthy information in edge deployments and fog computing is a non-trivial problem. In some examples, the trust should be generated in real time and in a large scale (i.e., a large volume of data and/or data from a large amount of sources). For example, the information (e.g., data) may be generated by groups of sensors (e.g., cameras) at a high rate (e.g., every 2 milliseconds (ms)). In other examples, the trust should be generated ordered in causality and time. For example, the information should be ordered in time and the time and order should be attestable.

Examples disclosed herein attest data generated in edge deployments including time and order information of the data. In examples disclosed herein, a hardware accelerated constellation of edge attestable media devices is generated. For example, the constellation includes a set of N edge devices that are interconnected. Each of the example N edge devices are responsible for validation of events (e.g., data generated) at each of the other N edge devices. In some examples, the validation result is digitally signed with a corresponding timestamp. The example constellation includes a blockchain block that can be used by a third-party to attest any event (e.g., data) generated within the constellation. In examples disclosed herein, each of the N edge devices includes logic for determining origination and identity of each of the other N edge devices by monitoring a latency between the edge devices.

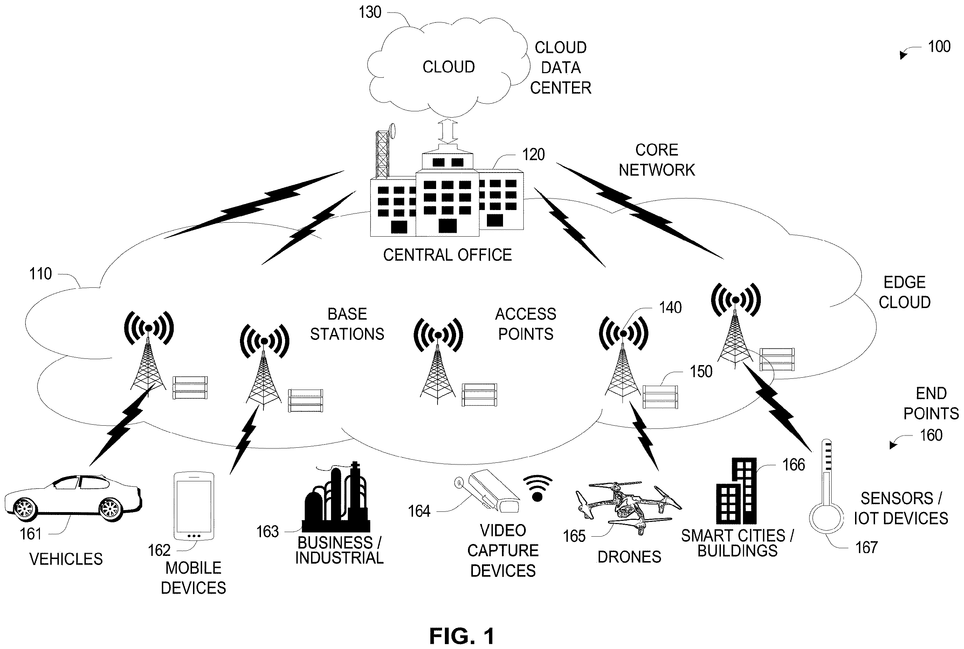

FIG. 1 is a block diagram 100 showing an overview of a configuration for edge computing, which includes a layer of processing referred to in many of the following examples as an "edge cloud". As shown, the edge cloud 110 is co-located at an edge location, such as an access point or base station 140, a local processing hub 150, or a central office 120, and thus may include multiple entities, devices, and equipment instances. The edge cloud 110 is located much closer to the endpoint (consumer and producer) data sources 160 (e.g., autonomous vehicles 161, user equipment 162, business and industrial equipment 163, video capture devices 164, drones 165, smart cities and building devices 166, sensors and IoT devices 167, etc.) than the cloud data center 130. Compute, memory, and storage resources which are offered at the edges in the edge cloud 110 are critical to providing ultra-low latency response times for services and functions used by the endpoint data sources 160 as well as reduce network backhaul traffic from the edge cloud 110 toward cloud data center 130 thus improving energy consumption and overall network usages among other benefits.

Compute, memory, and storage are scarce resources, and generally decrease depending on the edge location (e.g., fewer processing resources being available at consumer endpoint devices, than at a base station, than at a central office). However, the closer that the edge location is to the endpoint (e.g., user equipment (UE)), the more that space and power is often constrained. Thus, edge computing attempts to reduce the amount of resources needed for network services, through the distribution of more resources which are located closer both geographically and in network access time. In this manner, edge computing attempts to bring the compute resources to the workload data where appropriate, or, bring the workload data to the compute resources.

The following describes aspects of an edge cloud architecture that covers multiple potential deployments and addresses restrictions that some network operators or service providers may have in their own infrastructures. These include, variation of configurations based on the edge location (because edges at a base station level, for instance, may have more constrained performance and capabilities in a multi-tenant scenario); configurations based on the type of compute, memory, storage, fabric, acceleration, or like resources available to edge locations, tiers of locations, or groups of locations; the service, security, and management and orchestration capabilities; and related objectives to achieve usability and performance of end services. These deployments may accomplish processing in network layers that may be considered as "near edge", "close edge", "local edge", "middle edge", or "far edge" layers, depending on latency, distance, and timing characteristics.

Edge computing is a developing paradigm where computing is performed at or closer to the "edge" of a network, typically through the use of a compute platform (e.g., x86 or ARM compute hardware architecture) implemented at base stations, gateways, network routers, or other devices which are much closer to endpoint devices producing and consuming the data. For example, edge gateway servers may be equipped with pools of memory and storage resources to perform computation in real-time for low latency use-cases (e.g., autonomous driving or video surveillance) for connected client devices. Or as an example, base stations may be augmented with compute and acceleration resources to directly process service workloads for connected user equipment, without further communicating data via backhaul networks. Or as another example, central office network management hardware may be replaced with standardized compute hardware that performs virtualized network functions and offers compute resources for the execution of services and consumer functions for connected devices. Within edge computing networks, there may be scenarios in services which the compute resource will be "moved" to the data, as well as scenarios in which the data will be "moved" to the compute resource. Or as an example, base station compute, acceleration and network resources can provide services in order to scale to workload demands on an as needed basis by activating dormant capacity (subscription, capacity on demand) in order to manage corner cases, emergencies or to provide longevity for deployed resources over a significantly longer implemented lifecycle.

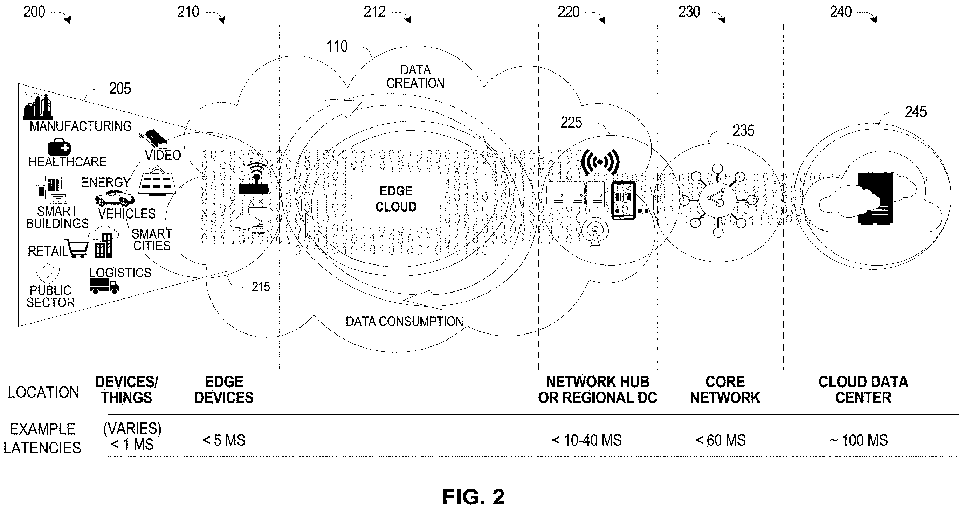

FIG. 2 illustrates operational layers among endpoints, an edge cloud, and cloud computing environments. Specifically, FIG. 2 depicts examples of computational use cases 205, utilizing the edge cloud 110 among multiple illustrative layers of network computing. The layers begin at an endpoint (devices and things) layer 200, which accesses the edge cloud 110 to conduct data creation, analysis, and data consumption activities. The edge cloud 110 may span multiple network layers, such as an edge devices layer 210 having gateways, on-premise servers, or network equipment (nodes 215) located in physically proximate edge systems; a network access layer 220, encompassing base stations, radio processing units, network hubs, regional data centers (DC), or local network equipment (equipment 225); and any equipment, devices, or nodes located therebetween (in layer 212, not illustrated in detail). The network communications within the edge cloud 110 and among the various layers may occur via any number of wired or wireless mediums, including via connectivity architectures and technologies not depicted.

Examples of latency, resulting from network communication distance and processing time constraints, may range from less than a millisecond (ms) when among the endpoint layer 200, under 5 ms at the edge devices layer 210, to even between 10 to 40 ms when communicating with nodes at the network access layer 220. Beyond the edge cloud 110 are core network 230 and cloud data center 240 layers, each with increasing latency (e.g., between 50-60 ms at the core network layer 230, to 100 or more ms at the cloud data center layer). As a result, operations at a core network data center 235 or a cloud data center 245, with latencies of at least 50 to 100 ms or more, will not be able to accomplish many time-critical functions of the use cases 205. Each of these latency values are provided for purposes of illustration and contrast; it will be understood that the use of other access network mediums and technologies may further reduce the latencies. In some examples, respective portions of the network may be categorized as "close edge", "local edge", "near edge", "middle edge", or "far edge" layers, relative to a network source and destination. For instance, from the perspective of the core network data center 235 or a cloud data center 245, a central office or content data network may be considered as being located within a "near edge" layer ("near" to the cloud, having high latency values when communicating with the devices and endpoints of the use cases 205), whereas an access point, base station, on-premise server, or network gateway may be considered as located within a "far edge" layer ("far" from the cloud, having low latency values when communicating with the devices and endpoints of the use cases 205). It will be understood that other categorizations of a particular network layer as constituting a "close", "local", "near", "middle", or "far" edge may be based on latency, distance, number of network hops, or other measurable characteristics, as measured from a source in any of the network layers 200-240.

The various use cases 205 may access resources under usage pressure from incoming streams, due to multiple services utilizing the edge cloud. To achieve results with low latency, the services executed within the edge cloud 110 balance varying requirements in terms of: (a) Priority (throughput or latency) and Quality of Service (QoS) (e.g., traffic for an autonomous car may have higher priority than a temperature sensor in terms of response time requirement; or, a performance sensitivity/bottleneck may exist at a compute/accelerator, memory, storage, or network resource, depending on the application); (b) Reliability and Resiliency (e.g., some input streams need to be acted upon and the traffic routed with mission-critical reliability, where as some other input streams may be tolerate an occasional failure, depending on the application); and (c) Physical constraints (e.g., power, cooling and form-factor).

The end-to-end service view for these use cases involves the concept of a service-flow and is associated with a transaction. The transaction details the overall service requirement for the entity consuming the service, as well as the associated services for the resources, workloads, workflows, and business functional and business level requirements. The services executed with the "terms" described may be managed at each layer in a way to assure real time, and runtime contractual compliance for the transaction during the lifecycle of the service. When a component in the transaction is missing its agreed to SLA, the system as a whole (components in the transaction) may provide the ability to (1) understand the impact of the SLA violation, and (2) augment other components in the system to resume overall transaction SLA, and (3) implement steps to remediate.

Thus, with these variations and service features in mind, edge computing within the edge cloud 110 may provide the ability to serve and respond to multiple applications of the use cases 205 (e.g., object tracking, video surveillance, connected cars, etc.) in real-time or near real-time, and meet ultra-low latency requirements for these multiple applications. These advantages enable a whole new class of applications (Virtual Network Functions (VNFs), Function as a Service (FaaS), Edge as a Service (EaaS), standard processes, etc.), which cannot leverage conventional cloud computing due to latency or other limitations.

However, with the advantages of edge computing comes the following caveats. The devices located at the edge are often resource constrained and therefore there is pressure on usage of edge resources. Typically, this is addressed through the pooling of memory and storage resources for use by multiple users (tenants) and devices. The edge may be power and cooling constrained and therefore the power usage needs to be accounted for by the applications that are consuming the most power. There may be inherent power-performance tradeoffs in these pooled memory resources, as many of them are likely to use emerging memory technologies, where more power requires greater memory bandwidth. Likewise, improved security of hardware and root of trust trusted functions are also required, because edge locations may be unmanned and may even need permissioned access (e.g., when housed in a third-party location). Such issues are magnified in the edge cloud 110 in a multi-tenant, multi-owner, or multi-access setting, where services and applications are requested by many users, especially as network usage dynamically fluctuates and the composition of the multiple stakeholders, use cases, and services changes.

At a more generic level, an edge computing system may be described to encompass any number of deployments at the previously discussed layers operating in the edge cloud 110 (network layers 200-240), which provide coordination from client and distributed computing devices. One or more edge gateway nodes, one or more edge aggregation nodes, and one or more core data centers may be distributed across layers of the network to provide an implementation of the edge computing system by or on behalf of a telecommunication service provider ("telco", or "TSP"), internet-of-things service provider, cloud service provider (CSP), enterprise entity, or any other number of entities. Various implementations and configurations of the edge computing system may be provided dynamically, such as when orchestrated to meet service objectives.

Consistent with the examples provided herein, a client compute node may be embodied as any type of endpoint component, device, appliance, or other thing capable of communicating as a producer or consumer of data. Further, the label "node" or "device" as used in the edge computing system does not necessarily mean that such node or device operates in a client or agent/minion/follower role; rather, any of the nodes or devices in the edge computing system refer to individual entities, nodes, or subsystems which include discrete or connected hardware or software configurations to facilitate or use the edge cloud 110.

As such, the edge cloud 110 is formed from network components and functional features operated by and within edge gateway nodes, edge aggregation nodes, or other edge compute nodes among network layers 210-230. The edge cloud 110 thus may be embodied as any type of network that provides edge computing and/or storage resources which are proximately located to radio access network (RAN) capable endpoint devices (e.g., mobile computing devices, IoT devices, smart devices, etc.), which are discussed herein. In other words, the edge cloud 110 may be envisioned as an "edge" which connects the endpoint devices and traditional network access points that serve as an ingress point into service provider core networks, including mobile carrier networks (e.g., Global System for Mobile Communications (GSM) networks, Long-Term Evolution (LTE) networks, 5G/6G networks, etc.), while also providing storage and/or compute capabilities. Other types and forms of network access (e.g., Wi-Fi, long-range wireless, wired networks including optical networks) may also be utilized in place of or in combination with such 3GPP carrier networks.

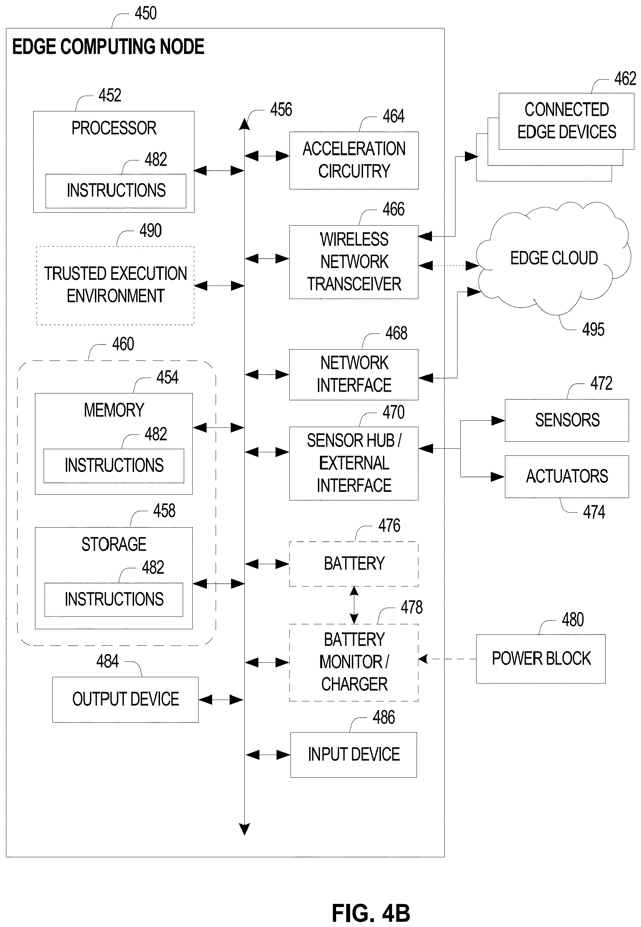

The network components of the edge cloud 110 may be servers, multi-tenant servers, appliance computing devices, and/or any other type of computing devices. For example, the edge cloud 110 may include an appliance computing device that is a self-contained electronic device including a housing, a chassis, a case or a shell. In some circumstances, the housing may be dimensioned for portability such that it can be carried by a human and/or shipped. Example housings may include materials that form one or more exterior surfaces that partially or fully protect contents of the appliance, in which protection may include weather protection, hazardous environment protection (e.g., EMI, vibration, extreme temperatures), and/or enable submergibility. Example housings may include power circuitry to provide power for stationary and/or portable implementations, such as AC power inputs, DC power inputs, AC/DC or DC/AC converter(s), power regulators, transformers, charging circuitry, batteries, wired inputs and/or wireless power inputs. Example housings and/or surfaces thereof may include or connect to mounting hardware to enable attachment to structures such as buildings, telecommunication structures (e.g., poles, antenna structures, etc.) and/or racks (e.g., server racks, blade mounts, etc.). Example housings may include cooling and/or heating equipment to protect the appliance computing device (e.g., and one or more of the compute platforms included therein) from hostile operating condition(s) (e.g., extreme heat, extreme cold), etc. Example housings for appliance computing devices that are structured to include multiple compute platforms may also include one or more interconnects (e.g., one or more busses, communication links, network interfaces, etc.) to facilitate communication among (e.g., communicatively couple) the multiple compute platforms to implement service failover, as disclosed above. In some such examples, the request and response messages sent among the multiple compute platforms to implement service failover, as disclosed above, are communicated within the appliance computing device via the one or more data interconnects included in such housings (e.g., instead of, or in addition to, being communicated via switch). Example housings and/or surfaces thereof may support one or more sensors (e.g., temperature sensors, vibration sensors, light sensors, acoustic sensors, capacitive sensors, proximity sensors, etc.). One or more such sensors may be contained in, carried by, or otherwise embedded in the surface and/or mounted to the surface of the appliance. Example housings and/or surfaces thereof may support mechanical connectivity, such as propulsion hardware (e.g., wheels, propellers, etc.) and/or articulating hardware (e.g., robot arms, pivotable appendages, etc.). In some circumstances, the sensors may include any type of input devices such as user interface hardware (e.g., buttons, switches, dials, sliders, etc.). In some circumstances, example housings include output devices contained in, carried by, embedded therein and/or attached thereto. Output devices may include displays, touchscreens, lights, LEDs, speakers, I/O ports (e.g., USB), etc. In some circumstances, edge devices are devices presented in the network for a specific purpose (e.g., a traffic light), but may have processing and/or other capacities that may be utilized for other purposes. Such edge devices may be independent from other networked devices and may be provided with a housing having a form factor suitable for its primary purpose; yet be available for other compute tasks that do not interfere with its primary task. Edge devices include Internet of Things devices. The appliance computing device may include hardware and software components to manage local issues such as device temperature, vibration, resource utilization, updates, power issues, physical and network security, etc. Example hardware for implementing an appliance computing device is described in conjunction with FIG. 4B. The edge cloud 110 may also include one or more servers and/or one or more multi-tenant servers. Such a server may include an operating system and a virtual computing environment. A virtual computing environment may include a hypervisor managing (spawning, deploying, destroying, etc.) one or more virtual machines, one or more containers, etc. Such virtual computing environments provide an execution environment in which one or more applications and/or other software, code or scripts may execute while being isolated from one or more other applications, software, code or scripts.

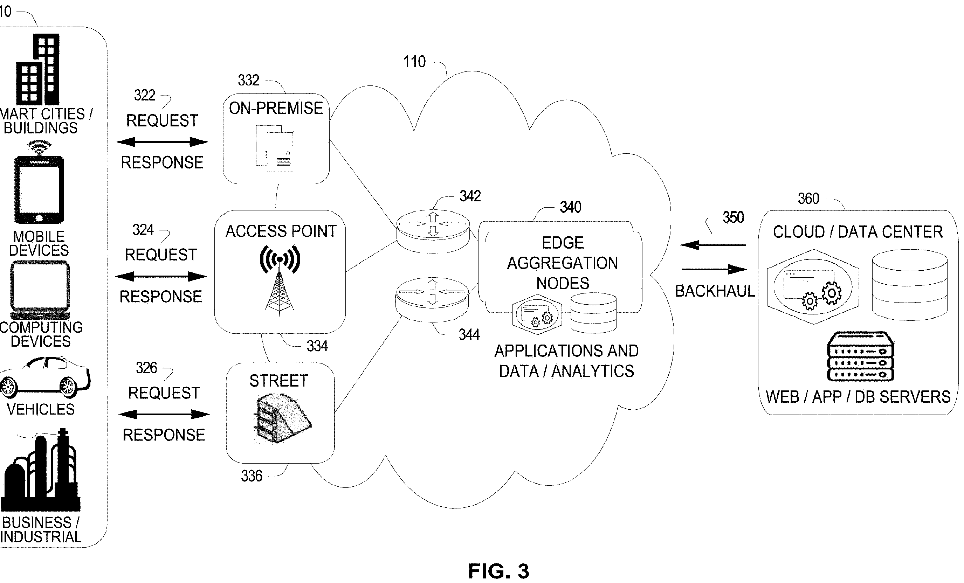

In FIG. 3, various client endpoints 310 (in the form of mobile devices, computers, autonomous vehicles, business computing equipment, industrial processing equipment) exchange requests and responses that are specific to the type of endpoint network aggregation. For instance, client endpoints 310 may obtain network access via a wired broadband network, by exchanging requests and responses 322 through an on-premise network system 332. Some client endpoints 310, such as mobile computing devices, may obtain network access via a wireless broadband network, by exchanging requests and responses 324 through an access point (e.g., cellular network tower) 334. Some client endpoints 310, such as autonomous vehicles may obtain network access for requests and responses 326 via a wireless vehicular network through a street-located network system 336. However, regardless of the type of network access, the TSP may deploy aggregation points 342, 344 within the edge cloud 110 to aggregate traffic and requests. Thus, within the edge cloud 110, the TSP may deploy various compute and storage resources, such as at edge aggregation nodes 340, to provide requested content. The edge aggregation nodes 340 and other systems of the edge cloud 110 are connected to a cloud or data center 360, which uses a backhaul network 350 to fulfill higher-latency requests from a cloud/data center for websites, applications, database servers, etc. Additional or consolidated instances of the edge aggregation nodes 340 and the aggregation points 342, 344, including those deployed on a single server framework, may also be present within the edge cloud 110 or other areas of the TSP infrastructure.

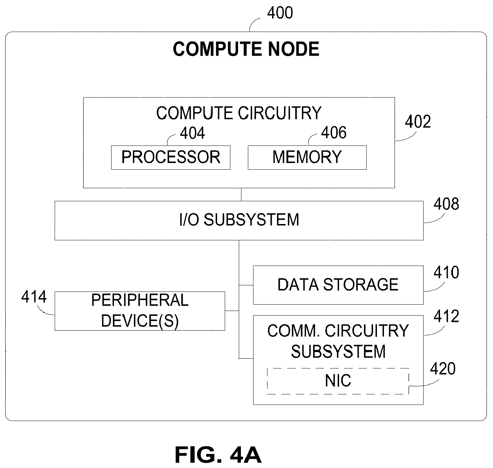

In further examples, any of the compute nodes or devices discussed with reference to the present edge computing systems and environment may be fulfilled based on the components depicted in FIGS. 4A and 4B. Respective edge compute nodes may be embodied as a type of device, appliance, computer, or other "thing" capable of communicating with other edge, networking, or endpoint components. For example, an edge compute device may be embodied as a personal computer, server, smartphone, a mobile compute device, a smart appliance, an in-vehicle compute system (e.g., a navigation system), a self-contained device having an outer case, shell, etc., or other device or system capable of performing the described functions.

In the simplified example depicted in FIG. 4A, an edge compute node 400 includes a compute engine (also referred to herein as "compute circuitry") 402, an input/output (I/O) subsystem 408, data storage 410, a communication circuitry subsystem 412, and, optionally, one or more peripheral devices 414. In other examples, respective compute devices may include other or additional components, such as those typically found in a computer (e.g., a display, peripheral devices, etc.). Additionally, in some examples, one or more of the illustrative components may be incorporated in, or otherwise form a portion of, another component.

The compute node 400 may be embodied as any type of engine, device, or collection of devices capable of performing various compute functions. In some examples, the compute node 400 may be embodied as a single device such as an integrated circuit, an embedded system, a field-programmable gate array (FPGA), a system-on-a-chip (SOC), or other integrated system or device. In the illustrative example, the compute node 400 includes or is embodied as a processor 404 and a memory 406. The processor 404 may be embodied as any type of processor capable of performing the functions described herein (e.g., executing an application). For example, the processor 404 may be embodied as a multi-core processor(s), a microcontroller, a processing unit, a specialized or special purpose processing unit, or other processor or processing/controlling circuit.

In some examples, the processor 404 may be embodied as, include, or be coupled to an FPGA, an application specific integrated circuit (ASIC), reconfigurable hardware or hardware circuitry, or other specialized hardware to facilitate performance of the functions described herein. Also in some examples, the processor 404 may be embodied as a specialized x-processing unit (xPU) also known as a data processing unit (DPU), infrastructure processing unit (IPU), or network processing unit (NPU). Such an xPU may be embodied as a standalone circuit or circuit package, integrated within an SOC, or integrated with networking circuitry (e.g., in a SmartNIC, or enhanced SmartNIC), acceleration circuitry, storage devices, or AI hardware (e.g., GPUs or programmed FPGAs). Such an xPU may be designed to receive programming to process one or more data streams and perform specific tasks and actions for the data streams (such as hosting microservices, performing service management or orchestration, organizing or managing server or data center hardware, managing service meshes, or collecting and distributing telemetry), outside of the CPU or general purpose processing hardware. However, it will be understood that a xPU, a SOC, a CPU, and other variations of the processor 404 may work in coordination with each other to execute many types of operations and instructions within and on behalf of the compute node 400.

The memory 406 may be embodied as any type of volatile (e.g., dynamic random access memory (DRAM), etc.) or non-volatile memory or data storage capable of performing the functions described herein. Volatile memory may be a storage medium that requires power to maintain the state of data stored by the medium. Non-limiting examples of volatile memory may include various types of random access memory (RAM), such as DRAM or static random access memory (SRAM). One particular type of DRAM that may be used in a memory module is synchronous dynamic random access memory (SDRAM).

In an example, the memory device is a block addressable memory device, such as those based on NAND or NOR technologies. A memory device may also include a three dimensional crosspoint memory device (e.g., Intel^{®} 3D XPoint^{™} memory), or other byte addressable write-in-place nonvolatile memory devices. The memory device may refer to the die itself and/or to a packaged memory product. In some examples, 3D crosspoint memory (e.g., Intel^{®} 3D XPoint^{™} memory) may comprise a transistor-less stackable cross point architecture in which memory cells sit at the intersection of word lines and bit lines and are individually addressable and in which bit storage is based on a change in bulk resistance. In some examples, all or a portion of the memory 406 may be integrated into the processor 404. The memory 406 may store various software and data used during operation such as one or more applications, data operated on by the application(s), libraries, and drivers.

The compute circuitry 402 is communicatively coupled to other components of the compute node 400 via the I/O subsystem 408, which may be embodied as circuitry and/or components to facilitate input/output operations with the compute circuitry 402 (e.g., with the processor 404 and/or the main memory 406) and other components of the compute circuitry 402. For example, the I/O subsystem 408 may be embodied as, or otherwise include, memory controller hubs, input/output control hubs, integrated sensor hubs, firmware devices, communication links (e.g., point-to-point links, bus links, wires, cables, light guides, printed circuit board traces, etc.), and/or other components and subsystems to facilitate the input/output operations. In some examples, the I/O subsystem 408 may form a portion of a system-on-a-chip (SoC) and be incorporated, along with one or more of the processor 404, the memory 406, and other components of the compute circuitry 402, into the compute circuitry 402.

The one or more illustrative data storage devices 410 may be embodied as any type of devices configured for short-term or long-term storage of data such as, for example, memory devices and circuits, memory cards, hard disk drives, solid-state drives, or other data storage devices. Individual data storage devices 410 may include a system partition that stores data and firmware code for the data storage device 410. Individual data storage devices 410 may also include one or more operating system partitions that store data files and executables for operating systems depending on, for example, the type of compute node 400.

The communication circuitry 412 may be embodied as any communication circuit, device, or collection thereof, capable of enabling communications over a network between the compute circuitry 402 and another compute device (e.g., an edge gateway of an implementing edge computing system). The communication circuitry 412 may be configured to use any one or more communication technology (e.g., wired or wireless communications) and associated protocols (e.g., a cellular networking protocol such a 3GPP 4G or 5G standard, a wireless local area network protocol such as IEEE 802.11/Wi-Fi^{®}, a wireless wide area network protocol, Ethernet, Bluetooth^{®}, Bluetooth Low Energy, a IoT protocol such as IEEE 802.15.4 or ZigBee^{®}, low-power wide-area network (LPWAN) or low-power wide-area (LPWA) protocols, etc.) to effect such communication.

The illustrative communication circuitry 412 includes a network interface controller (NIC) 420, which may also be referred to as a host fabric interface (HFI). The NIC 420 may be embodied as one or more add-in-boards, daughter cards, network interface cards, controller chips, chipsets, or other devices that may be used by the compute node 400 to connect with another compute device (e.g., an edge gateway node). In some examples, the NIC 420 may be embodied as part of a system-on-a-chip (SoC) that includes one or more processors, or included on a multichip package that also contains one or more processors. In some examples, the NIC 420 may include a local processor (not shown) and/or a local memory (not shown) that are both local to the NIC 420. In such examples, the local processor of the NIC 420 may be capable of performing one or more of the functions of the compute circuitry 402 described herein. Additionally, or alternatively, in such examples, the local memory of the NIC 420 may be integrated into one or more components of the client compute node at the board level, socket level, chip level, and/or other levels.

Additionally, in some examples, a respective compute node 400 may include one or more peripheral devices 414. Such peripheral devices 414 may include any type of peripheral device found in a compute device or server such as audio input devices, a display, other input/output devices, interface devices, and/or other peripheral devices, depending on the particular type of the compute node 400. In further examples, the compute node 400 may be embodied by a respective edge compute node (whether a client, gateway, or aggregation node) in an edge computing system or like forms of appliances, computers, subsystems, circuitry, or other components.

In a more detailed example, FIG. 4B illustrates a block diagram of an example of components that may be present in an edge computing node 450 for implementing the techniques (e.g., operations, processes, methods, and methodologies) described herein. This edge computing node 450 provides a closer view of the respective components of node 400 when implemented as or as part of a computing device (e.g., as a mobile device, a base station, server, gateway, etc.). The edge computing node 450 may include any combinations of the hardware or logical components referenced herein, and it may include or couple with any device usable with an edge communication network or a combination of such networks. The components may be implemented as integrated circuits (ICs), portions thereof, discrete electronic devices, or other modules, instruction sets, programmable logic or algorithms, hardware, hardware accelerators, software, firmware, or a combination thereof adapted in the edge computing node 450, or as components otherwise incorporated within a chassis of a larger system.

The edge computing device 450 may include processing circuitry in the form of a processor 452, which may be a microprocessor, a multi-core processor, a multithreaded processor, an ultra-low voltage processor, an embedded processor, an xPU/DPU/IPU/NPU, special purpose processing unit, specialized processing unit, or other known processing elements. The processor 452 may be a part of a system on a chip (SoC) in which the processor 452 and other components are formed into a single integrated circuit, or a single package, such as the Edison^{™} or Galileo^{™} SoC boards from Intel Corporation, Santa Clara, California. As an example, the processor 452 may include an Intel^{®} Architecture Core^{™} based CPU processor, such as a Quark^{™}, an Atom^{™}, an i3, an i5, an i7, an i9, or an MCU-class processor, or another such processor available from Intel^{®}. However, any number other processors may be used, such as available from Advanced Micro Devices, Inc. (AMD^{®}) of Sunnyvale, California, a MIPS^{®}-based design from MIPS Technologies, Inc. of Sunnyvale, California, an ARM^{®}-based design licensed from ARM Holdings, Ltd. or a customer thereof, or their licensees or adopters. The processors may include units such as an A5-A13 processor from Apple^{®} Inc., a Snapdragon^{™} processor from Qualcomm^{®} Technologies, Inc., or an OMAP^{™} processor from Texas Instruments, Inc. The processor 452 and accompanying circuitry may be provided in a single socket form factor, multiple socket form factor, or a variety of other formats, including in limited hardware configurations or configurations that include fewer than all elements shown in FIG. 4B.

The processor 452 may communicate with a system memory 454 over an interconnect 456 (e.g., a bus). Any number of memory devices may be used to provide for a given amount of system memory. As examples, the memory 754 may be random access memory (RAM) in accordance with a Joint Electron Devices Engineering Council (JEDEC) design such as the DDR or mobile DDR standards (e.g., LPDDR, LPDDR2, LPDDR3, or LPDDR4). In particular examples, a memory component may comply with a DRAM standard promulgated by JEDEC, such as JESD79F for DDR SDRAM, JESD79-2F for DDR2 SDRAM, JESD79-3F for DDR3 SDRAM, JESD79-4A for DDR4 SDRAM, JESD209 for Low Power DDR (LPDDR), JESD209-2 for LPDDR2, JESD209-3 for LPDDR3, and JESD209-4 for LPDDR4. Such standards (and similar standards) may be referred to as DDR-based standards and communication interfaces of the storage devices that implement such standards may be referred to as DDR-based interfaces. In various implementations, the individual memory devices may be of any number of different package types such as single die package (SDP), dual die package (DDP) or quad die package (Q17P). These devices, in some examples, may be directly soldered onto a motherboard to provide a lower profile solution, while in other examples the devices are configured as one or more memory modules that in turn couple to the motherboard by a given connector. Any number of other memory implementations may be used, such as other types of memory modules, e.g., dual inline memory modules (DIMMs) of different varieties including but not limited to microDIMMs or MiniDIMMs.

To provide for persistent storage of information such as data, applications, operating systems and so forth, a storage 458 may also couple to the processor 452 via the interconnect 456. In an example, the storage 458 may be implemented via a solid-state disk drive (SSDD). Other devices that may be used for the storage 458 include flash memory cards, such as Secure Digital (SD) cards, microSD cards, eXtreme Digital (XD) picture cards, and the like, and Universal Serial Bus (USB) flash drives. In an example, the memory device may be or may include memory devices that use chalcogenide glass, multi-threshold level NAND flash memory, NOR flash memory, single or multi-level Phase Change Memory (PCM), a resistive memory, nanowire memory, ferroelectric transistor random access memory (FeTRAM), anti-ferroelectric memory, magnetoresistive random access memory (MRAM) memory that incorporates memristor technology, resistive memory including the metal oxide base, the oxygen vacancy base and the conductive bridge Random Access Memory (CB-RAM), or spin transfer torque (STT)-MRAM, a spintronic magnetic junction memory based device, a magnetic tunneling junction (MTJ) based device, a DW (Domain Wall) and SOT (Spin Orbit Transfer) based device, a thyristor based memory device, or a combination of any of the above, or other memory.

In low power implementations, the storage 458 may be on-die memory or registers associated with the processor 452. However, in some examples, the storage 458 may be implemented using a micro hard disk drive (HDD). Further, any number of new technologies may be used for the storage 458 in addition to, or instead of, the technologies described, such resistance change memories, phase change memories, holographic memories, or chemical memories, among others.

The components may communicate over the interconnect 456. The interconnect 456 may include any number of technologies, including industry standard architecture (ISA), extended ISA (EISA), peripheral component interconnect (PCI), peripheral component interconnect extended (PCIx), PCI express (PCIe), or any number of other technologies. The interconnect 456 may be a proprietary bus, for example, used in an SoC based system. Other bus systems may be included, such as an Inter-Integrated Circuit (I2C) interface, a Serial Peripheral Interface (SPI) interface, point to point interfaces, and a power bus, among others.

The interconnect 456 may couple the processor 452 to a transceiver 466, for communications with the connected edge devices 462. The transceiver 466 may use any number of frequencies and protocols, such as 2.4 Gigahertz (GHz) transmissions under the IEEE 802.15.4 standard, using the Bluetooth^{®} low energy (BLE) standard, as defined by the Bluetooth^{®} Special Interest Group, or the ZigBee^{®} standard, among others. Any number of radios, configured for a particular wireless communication protocol, may be used for the connections to the connected edge devices 462. For example, a wireless local area network (WLAN) unit may be used to implement Wi-Fi^{®} communications in accordance with the Institute of Electrical and Electronics Engineers (IEEE) 802.11 standard. In addition, wireless wide area communications, e.g., according to a cellular or other wireless wide area protocol, may occur via a wireless wide area network (WWAN) unit.

The wireless network transceiver 466 (or multiple transceivers) may communicate using multiple standards or radios for communications at a different range. For example, the edge computing node 450 may communicate with close devices, e.g., within about 10 meters, using a local transceiver based on Bluetooth Low Energy (BLE), or another low power radio, to save power. More distant connected edge devices 462, e.g., within about 50 meters, may be reached over ZigBee^{®} or other intermediate power radios. Both communications techniques may take place over a single radio at different power levels or may take place over separate transceivers, for example, a local transceiver using BLE and a separate mesh transceiver using ZigBee^{®}.

A wireless network transceiver 466 (e.g., a radio transceiver) may be included to communicate with devices or services in a cloud (e.g., an edge cloud 495) via local or wide area network protocols. The wireless network transceiver 466 may be a low-power wide-area (LPWA) transceiver that follows the IEEE 802.15.4, or IEEE 802.15.4g standards, among others. The edge computing node 450 may communicate over a wide area using LoRaWAN^{™} (Long Range Wide Area Network) developed by Semtech and the LoRa Alliance. The techniques described herein are not limited to these technologies but may be used with any number of other cloud transceivers that implement long range, low bandwidth communications, such as Sigfox, and other technologies. Further, other communications techniques, such as time-slotted channel hopping, described in the IEEE 802.15.4e specification may be used.

Any number of other radio communications and protocols may be used in addition to the systems mentioned for the wireless network transceiver 466, as described herein. For example, the transceiver 466 may include a cellular transceiver that uses spread spectrum (SPA/SAS) communications for implementing high-speed communications. Further, any number of other protocols may be used, such as Wi-Fi^{®} networks for medium speed communications and provision of network communications. The transceiver 466 may include radios that are compatible with any number of 3GPP (Third Generation Partnership Project) specifications, such as Long Term Evolution (LTE) and 5th Generation (5G) communication systems, discussed in further detail at the end of the present disclosure. A network interface controller (NIC) 468 may be included to provide a wired communication to nodes of the edge cloud 495 or to other devices, such as the connected edge devices 462 (e.g., operating in a mesh). The wired communication may provide an Ethernet connection or may be based on other types of networks, such as Controller Area Network (CAN), Local Interconnect Network (LIN), DeviceNet, ControlNet, Data Highway+, PROFIBUS, or PROFINET, among many others. An additional NIC 468 may be included to enable connecting to a second network, for example, a first NIC 468 providing communications to the cloud over Ethernet, and a second NIC 468 providing communications to other devices over another type of network.

Given the variety of types of applicable communications from the device to another component or network, applicable communications circuitry used by the device may include or be embodied by any one or more of components 464, 466, 468, or 470. Accordingly, in various examples, applicable means for communicating (e.g., receiving, transmitting, etc.) may be embodied by such communications circuitry.

The edge computing node 450 may include or be coupled to acceleration circuitry 464, which may be embodied by one or more artificial intelligence (AI) accelerators, a neural compute stick, neuromorphic hardware, an FPGA, an arrangement of GPUs, an arrangement of xPUs/DPUs/IPU/NPUs, one or more SoCs, one or more CPUs, one or more digital signal processors, dedicated ASICs, or other forms of specialized processors or circuitry designed to accomplish one or more specialized tasks. These tasks may include AI processing (including machine learning, training, inferencing, and classification operations), visual data processing, network data processing, object detection, rule analysis, or the like. These tasks also may include the specific edge computing tasks for service management and service operations discussed elsewhere in this document.

The interconnect 456 may couple the processor 452 to a sensor hub or external interface 470 that is used to connect additional devices or subsystems. The devices may include sensors 472, such as accelerometers, level sensors, flow sensors, optical light sensors, camera sensors, temperature sensors, global navigation system (e.g., GPS) sensors, pressure sensors, barometric pressure sensors, and the like. The hub or interface 470 further may be used to connect the edge computing node 450 to actuators 474, such as power switches, valve actuators, an audible sound generator, a visual warning device, and the like.

In some optional examples, various input/output (I/O) devices may be present within or connected to, the edge computing node 450. For example, a display or other output device 484 may be included to show information, such as sensor readings or actuator position. An input device 486, such as a touch screen or keypad may be included to accept input. An output device 484 may include any number of forms of audio or visual display, including simple visual outputs such as binary status indicators (e.g., light-emitting diodes (LEDs)) and multi-character visual outputs, or more complex outputs such as display screens (e.g., liquid crystal display (LCD) screens), with the output of characters, graphics, multimedia objects, and the like being generated or produced from the operation of the edge computing node 450. A display or console hardware, in the context of the present system, may be used to provide output and receive input of an edge computing system; to manage components or services of an edge computing system; identify a state of an edge computing component or service; or to conduct any other number of management or administration functions or service use cases.

A battery 476 may power the edge computing node 450, although, in examples in which the edge computing node 450 is mounted in a fixed location, it may have a power supply coupled to an electrical grid, or the battery may be used as a backup or for temporary capabilities. The battery 476 may be a lithium ion battery, or a metal-air battery, such as a zinc-air battery, an aluminum-air battery, a lithium-air battery, and the like.

A battery monitor/charger 478 may be included in the edge computing node 450 to track the state of charge (SoCh) of the battery 476, if included. The battery monitor/charger 478 may be used to monitor other parameters of the battery 476 to provide failure predictions, such as the state of health (SoH) and the state of function (SoF) of the battery 476. The battery monitor/charger 478 may include a battery monitoring integrated circuit, such as an LTC4020 or an LTC2990 from Linear Technologies, an ADT7488A from ON Semiconductor of Phoenix Arizona, or an IC from the UCD90xxx family from Texas Instruments of Dallas, TX. The battery monitor/charger 478 may communicate the information on the battery 476 to the processor 452 over the interconnect 456. The battery monitor/charger 478 may also include an analog-to-digital (ADC) converter that enables the processor 452 to directly monitor the voltage of the battery 476 or the current flow from the battery 476. The battery parameters may be used to determine actions that the edge computing node 450 may perform, such as transmission frequency, mesh network operation, sensing frequency, and the like.

A power block 480, or other power supply coupled to a grid, may be coupled with the battery monitor/charger 478 to charge the battery 476. In some examples, the power block 480 may be replaced with a wireless power receiver to obtain the power wirelessly, for example, through a loop antenna in the edge computing node 450. A wireless battery charging circuit, such as an LTC4020 chip from Linear Technologies of Milpitas, California, among others, may be included in the battery monitor/charger 478. The specific charging circuits may be selected based on the size of the battery 476, and thus, the current required. The charging may be performed using the Airfuel standard promulgated by the Airfuel Alliance, the Qi wireless charging standard promulgated by the Wireless Power Consortium, or the Rezence charging standard, promulgated by the Alliance for Wireless Power, among others.

The storage 458 may include instructions 482 in the form of software, firmware, or hardware commands to implement the techniques described herein. Although such instructions 482 are shown as code blocks included in the memory 454 and the storage 458, it may be understood that any of the code blocks may be replaced with hardwired circuits, for example, built into an application specific integrated circuit (ASIC).

In an example, the instructions 482 provided via the memory 454, the storage 458, or the processor 452 may be embodied as a non-transitory, machine-readable medium 460 including code to direct the processor 452 to perform electronic operations in the edge computing node 450. The processor 452 may access the non-transitory, machine-readable medium 460 over the interconnect 456. For instance, the non-transitory, machine-readable medium 460 may be embodied by devices described for the storage 458 or may include specific storage units such as optical disks, flash drives, or any number of other hardware devices. The non-transitory, machine-readable medium 460 may include instructions to direct the processor 452 to perform a specific sequence or flow of actions, for example, as described with respect to the flowchart(s) and block diagram(s) of operations and functionality depicted above. As used herein, the terms "machine-readable medium" and "computer-readable medium" are interchangeable.

Also in a specific example, the instructions 482 on the processor 452 (separately, or in combination with the instructions 482 of the machine readable medium 460) may configure execution or operation of a trusted execution environment (TEE) 490. In an example, the TEE 490 operates as a protected area accessible to the processor 452 for secure execution of instructions and secure access to data. Various implementations of the TEE 490, and an accompanying secure area in the processor 452 or the memory 454 may be provided, for instance, through use of Intel^{®} Software Guard Extensions (SGX) or ARM^{®} TrustZone^{®} hardware security extensions, Intel^{®} Management Engine (ME), or Intel^{®} Converged Security Manageability Engine (CSME). Other aspects of security hardening, hardware roots-of-trust, and trusted or protected operations may be implemented in the device 450 through the TEE 490 and the processor 452.

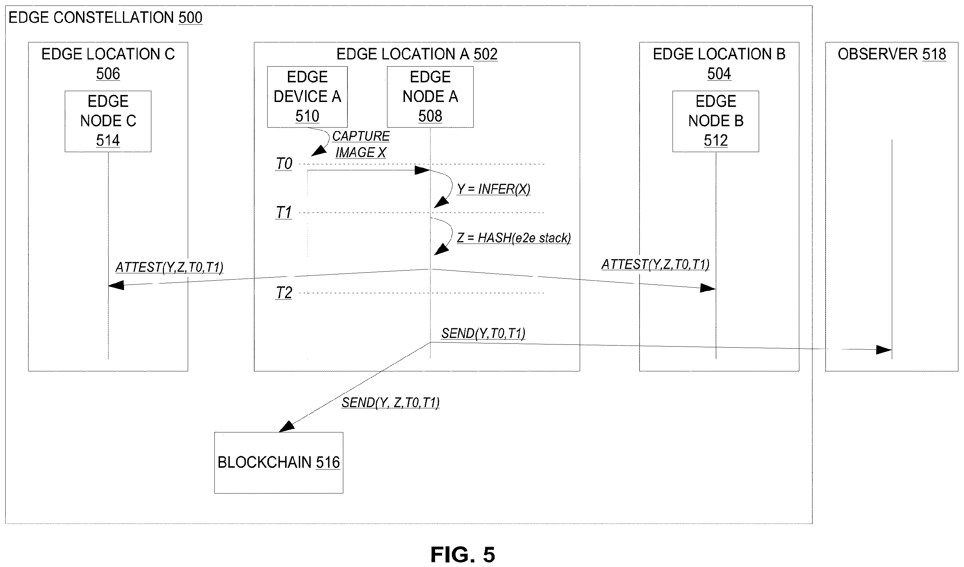

FIG. 5 is a block diagram of example edge constellation 500 to attest event data generated in the edge constellation 500. The example edge constellation 500 includes a set of trusted peers (e.g., edge nodes) used to attest each of the other peers. In some examples, the example edge constellation 500 may be referred to as an edge group, an edge system, and/or an edge constellation system. The edge constellation 500 of FIG. 5 may be instantiated (e.g., creating an instance of, bring into being for any length of time, materialize, implement, etc.) by processor circuitry such as a central processing unit executing instructions. Additionally or alternatively, the edge constellation 500 of FIG. 5 may be instantiated (e.g., creating an instance of, bring into being for any length of time, materialize, implement, etc.) by an ASIC or an FPGA structured to perform operations corresponding to the instructions. It should be understood that some or all of the circuitry of FIG. 5 may, thus, be instantiated at the same or different times. Some or all of the circuitry may be instantiated, for example, in one or more threads executing concurrently on hardware and/or in series on hardware. Moreover, in some examples, some or all of the circuitry of FIG. 5 may be implemented by one or more virtual machines and/or containers executing on the microprocessor. In the example of FIG. 5, the edge constellation 500 belongs to a single tenant (e.g., a single user). In some examples, the edge constellation 500 belongs to multiple tenants (e.g., multiple users).

In the example of FIG. 5, the example edge constellation 500 includes edge location A 502, edge location B 504, and edge location C 506. In other examples, the edge constellation 500 may include additional edge locations. The example edge location A 502 includes edge node A 508 and edge device A 510, the example edge location B 504 includes edge node B 512, and the example edge location C 506 includes edge node C 514. In the example of additional edge locations, each of the edge locations may include a respective edge node and/or an edge device. Each of the edge nodes (e.g., the edge node A 508, the edge node B 512, and the edge node C 514) are connected via a wired or wireless connection. In some examples, one or more of the edge nodes (e.g., the edge node A 508, the edge node B 512, and/or the edge node C 514) of the edge constellation 500 may be contained within a single physical device (e.g., computing device, mobile device, IoT device, etc.). In other words, one or more of the edge locations (e.g., the edge location A 502, the edge location B 504, and/or the edge location C 506) may be contained within a single physical device (e.g., computing device, mobile device, IoT device, etc.). The example edge constellation 500 of FIG. 5 also includes a blockchain 516. The example blockchain 516 includes attestable information generated by the edge constellation 500 ordered by sequence and by timestamp. For example, the blockchain block 516 can include a list of blocks (e.g., records) of discrete events that have occurred within the edge constellation. Each block can include a hash of a previous block, a timestamp, and event data. The example blockchain 516 is accessible by each of the edge nodes (e.g., the edge node A 508, the edge node B 512, and the edge node C 514) of the edge constellation 500.

The example of FIG. 5 includes an observer 518 (e.g., a third-party, a third-party observer, a relying party). The example observer 518 is not included in the example edge constellation 500 but can access or receive data from the edge constellation 500 via a wired or wireless connection. For example, the edge node A 508 may send information (e.g., event data) to the observer 518. In some examples, the information sent to the observer 518 by the edge node A 508 includes timestamp information. In another example, the observer 518 can access the blockchain 516.

The example edge constellation 500 of FIG. 5 is configured to attest (e.g., assign trust) events occurring at each edge device (e.g., the edge device A 510) within the edge constellation 500. For example, a latency between two nodes (e.g., the edge node A 508 and the edge node B 512) can be used by one of the nodes (e.g., the edge node B 512) to determine (e.g., validate) an origination and an identity of the other node (e.g., the edge node A 508). If the node (e.g., the edge node B 512) can validate the origination and identity of the other node (e.g., the edge node A 508), the node can attest (e.g., assign trust) to an event occurring on the other node. In some examples, the event data generated at a node (e.g., the edge node A 508) is attested by each of the other nodes (e.g., the edge node B 512 and the edge node C 514) in the edge constellation 500. If event data generated at a node (e.g., the edge node A 508) is attested by the other nodes in the edge constellation 500, the node (e.g., the edge node A 508) can add the event data to a block in the blockchain 516. Further, if event data generated at a node (e.g., the edge node A 508 is attested by the other nodes in the edge constellation 500, the node can send the event data to an observer 518.

An example process for attesting event data is illustrated in FIG. 5. As shown in FIG. 5, the example edge device A 510 captures event data (e.g., image X) at a time *T0.* Subsequently, the example edge device A 510 notifies the example edge node A 508 that the event data (e.g., image X) has been generated. The example notification can include the timestamp *T0.* Additionally, the example edge device A 510 transmits the event data (e.g., image X) to the example edge node A 508. After the example edge node A 508 receives the event data (e.g., image X), the example edge node A 508 generates attestation data (e.g., evidence) relating to the event data. For example, the edge node A 508 processes the event data in one or more steps and associates a timestamp with each step. In the example of FIG. 5, the edge node A 508 performs an inference on the event data (e.g., image X) by using the event data as an input to a neural network model (e.g., an object detection neural network). The example edge node A 508 stores the result of the inference of the neural network model as *Y* and stores a timestamp corresponding to the time the inference was completed as *T1.* In another example, the edge node A 508 can first transcode the image X at a time *T1a* before performing the inference on the image X at a time *T1b.*

Each of the timestamps (e.g., *T0, T1, T1a, T1b*) corresponds to an event with an associated data unit process key performance indicator (KPI). For example, the timestamp *T1* corresponds to a time at which an inference on the event data was performed. The time between the timestamps *T0* and *T1* is indicative of the time it took for the edge node A 508 to perform the inference on the event data using the neural network. Such KPIs referring to an amount of time for a data unit process may be referred to as latency KPIs.

In the example of FIG. 5, the edge node A 508 generates a hash of the end-to-end stack of the edge node A 508. The end-to-end stack includes information such as, but not limited to, a firmware version, unclonable functions, a root-of-trust context, and/or neural network algorithms. The example edge node A 508 stores the hash of the end-to-end stack as Z. The example edge node A 508 then sends a package corresponding to the event data including the attestation data (*Y*), the hash of the end-to-end stack (Z) and the timestamps *T0* and *T1* to the edge node B 512 and the edge node C 514 for attestation. In some examples, the package including the attestation data (*Y*), the hash of the end-to-end stack (Z) and the timestamps *T0* and *T1* may be sent to additional edge nodes within the edge constellation 500. In other examples, the package includes additional data to be used for attestation other than the attestation data (*Y*), the hash of the end-to-end stack (Z) and the timestamps *T0* and *T1.*

Each of the edge constellation nodes (e.g., the edge node B 512 and the edge node C 514) attests (e.g., validates) the event data using the package sent by the edge node A 508. In order to attest the event data from a peer node, each of the edge constellation nodes (e.g., the edge node B 512) generates a neural network model for each of the other edge constellation nodes (e.g., the edge node A 508) based on the other edge constellation node's latency KPIs. For example, the neural network model within the edge node B 512 corresponding to the edge node A 508 can be trained with latency KPIs sent to the edge node B 512 from the edge node A 508 during a training period. Additionally or alternatively, the neural network model corresponding to the edge node A 508 can be trained using historical KPI measurements. During operation of the neural network model, the latency KPIs sent to the edge node B 512 from the edge node A 508 can be used to continue training and updating the model. To perform attestation, the neural network model corresponding to the edge node A 508 can predict one or more latency KPIs that may be included in the attestation data package. The predicted latency KPI(s) can be compared to the actual latency KPI(s) received from the edge node (e.g., the edge node A 508). If the actual latency KPI(s) are similar to (e.g., within ten percent) the predicted latency KPI(s), the edge node (e.g., the edge node B 512) can attest the event data generated by the peer edge node (e.g., the edge node A 508). If the actual latency KPI(s) are different from (e.g., greater than or less than ten percent of) the predicted latency KPI(s), the edge node (e.g., the edge node B 512) is alerted that the peer edge node (e.g., the edge node A 508) may have been altered and the event data is not attested.

Additionally, the edge node (e.g., the edge node B 512) may also attest the additional data sent by the peer edge node (e.g., the edge node A 508) such as the hash of the end-to-end stack (Z) in addition to the latency KPI(s). If each of the evidence (the attestation data (*Y*), the hash of the end-to-end stack (Z) and the timestamps *T0* and *T1*) is attested, the edge node (e.g., the edge node B 512) can attest the event data generated by the peer edge node (e.g., the edge node A 508). Each node (e.g., the edge node B 512, the edge node C 514) that attests the event data transmits a message back to the event data originating node (e.g., the edge node A 508) informing that the event data is attested. If each of the peer nodes attests the event data, the data originating node (e.g., the edge node A 508) sends the validated event data including the hash (Z) and the timestamps (*T0, T1*) to the blockchain 516. In the example of FIG. 5, the edge node A 508 additionally sends the validated event data including the processed event data (Y) and the timestamps (*T0, T1*) to the observer 518. As explained above, the observer 518 can retrieve the history from the blockchain 516 to further validate the event data.

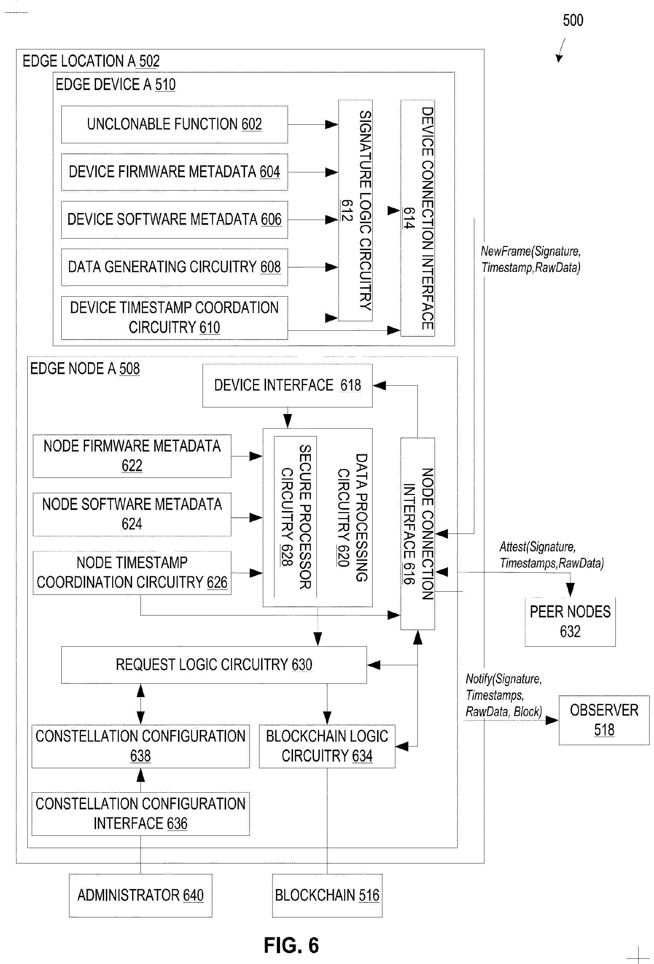

FIG. 6 illustrates an example block diagram of the edge constellation 500 of FIG. 5. In the example of FIG. 6, the edge constellation 500 includes the edge location A 502 including the edge device A 510 and the edge node A 508. The example edge device A 510 includes an unclonable function 602, device firmware metadata 604, device software metadata 606, data generating circuitry 608, device timestamp coordination circuitry 610, signature logic circuitry 612, and a device connection interface 614.

The example unclonable function 602 of the edge device A 510 provides a digital fingerprint for the edge device A 510. For example, for a given challenge (e.g., input and conditions), the unclonable function 602 provides an output (e.g., response) that can serve as a unique identifier of the edge device A 510. The example unclonable function 602 can be a physical component of circuitry of the edge device A 510 with its function based on naturally occurring physical variations during manufacturing. The example device firmware metadata 604 includes information relating to the firmware of the edge device A 510. For example, the device firmware metadata 604 can include a firmware version, a firmware filename and/or a checksum of the firmware binary. The example device software metadata 606 includes information relating to the software of the edge device A 510. For example, the device software metadata 606 can include a software version and a software filename.

The data generating circuitry 608 of the edge device A 510 includes logic for generating event data correspond to a device type of the edge device A 510. For example, data generating circuitry 608 can include logic for capturing a video frame if the edge device A 510 is a video camera. In another example, the data generating circuitry 608 includes logic for capturing sensor data if the edge device A 510 is a temperature sensor. In some examples, the data generating circuitry 608 includes logic for including a signature in the event data. For example, the data generating circuitry 608 can include a watermark in a video frame if the edge device A 510 is a video camera. The device timestamp coordination circuitry 610 of the edge device A 510 includes logic for coordinating the current time with the other devices and/or nodes of the edge constellation 500. For example, the device timestamp coordination circuitry 610 uses a Network Time Protocol (NTP) to synchronize the clock of the edge device A 510 to Coordinated Universal Time (UTC). Each of the devices and/or nodes of the edge constellation 500 can also synchronize a clock of the device and/or node to UTC. Because the clock time of each of the devices and/or nodes of the edge constellation 500 is synchronized to the same standard (e.g., UTC), synchronizing the clock of the edge device A 510 to UTC coordinates the current clock time of the edge device A 510 to the clock time of the other devices and/or nodes of the edge constellation 500.

The signature logic circuitry 612 of the edge device A 510 includes logic for signing event data generated by the data generating circuitry 608. For example, each time the data generating circuitry 608 generates event data (e.g., captures a video frame), the signature logic circuitry 612 generates a signature to be associated with the event data. The signature can include information relating to the edge device A 510 such as the device firmware metadata 604, the device software metadata 606, and information regarding the unclonable function 602 and the data generating circuitry 608. The example signature logic circuitry 612 passes the signature along with the event data to the device connection interface 614. The example device connection interface 614 connects the edge device A 510 to a network for communication with the edge node A 508. For example, the device connection interface 614 can be a network interface controller (NIC) including circuitry to communicate with the edge node A 508 via a wired or wireless connection. The example device connection interface 614 additionally receives a timestamp (e.g., *T0*) associated with the event data from the device timestamp coordination circuitry 610. In the example of FIG. 6, the device connection interface 614 transmits the signature, the timestamp, and the event data to the edge node A 508.

The example edge node A 508 includes a node connection interface 616, a device interface 618, data processing circuitry 620, node firmware metadata 622, node software metadata 624, node timestamp coordination circuitry 626, secure processor circuitry 628, request logic circuitry 630, blockchain logic circuitry 634, a constellation configuration interface 636, and a constellation configuration 638. The example node connection interface 616 connects the edge node A 508 to a network for communication with the edge device A 510, peer nodes 632 and the observer 518. For example, the node connection interface 616 can be a NIC including circuitry to communicate via a wired or wireless connection with computing devices such as those listed above. The example node connection interface 616 receives the signature, the timestamp, and the event data from the edge device A 510. The example device interface 618 of the edge node A 508 receives the signature, the timestamp, and the event data from the node connection interface 616 and notifies the edge node A 508 that new event data is available from the edge device A 510. The example device interface 618 then passes the signature, the timestamp, and the event data to the data processing circuitry 620.

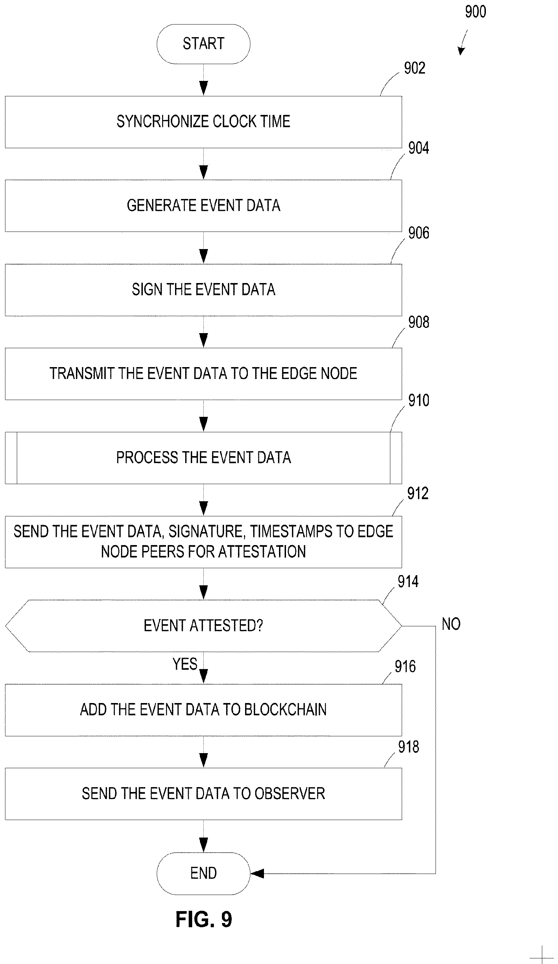

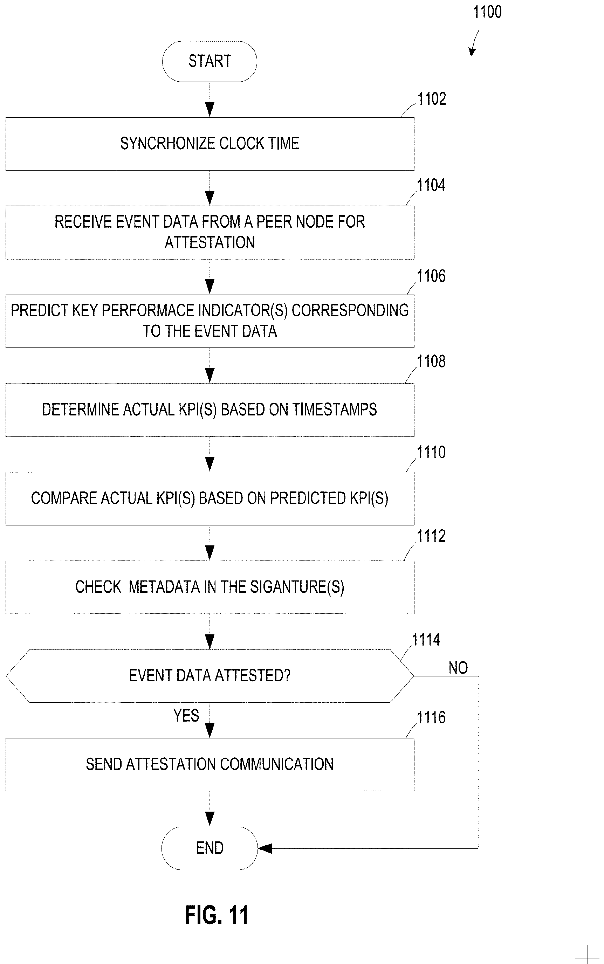

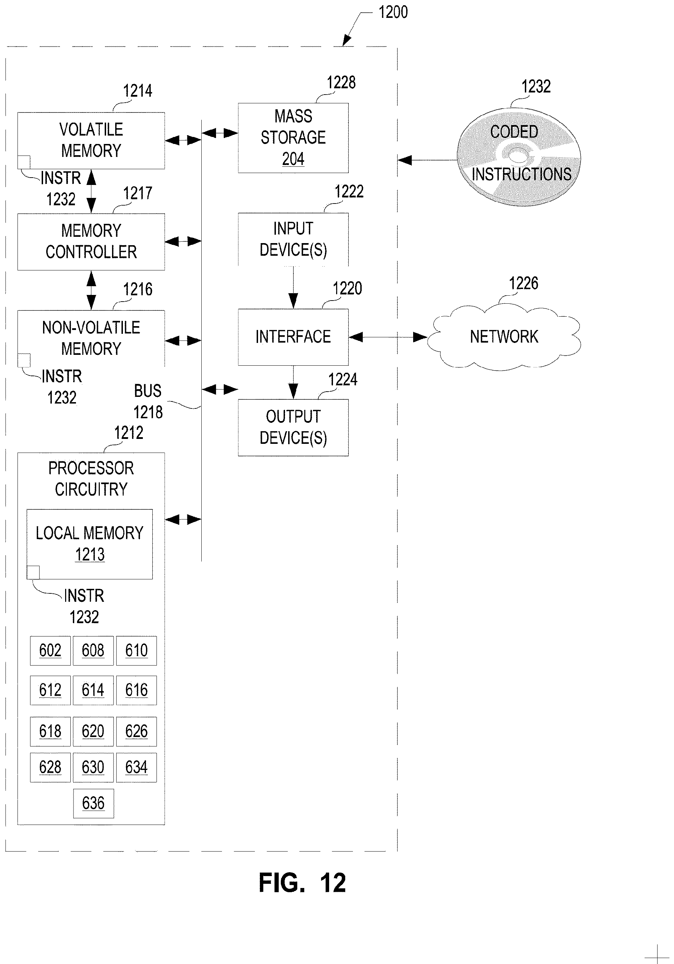

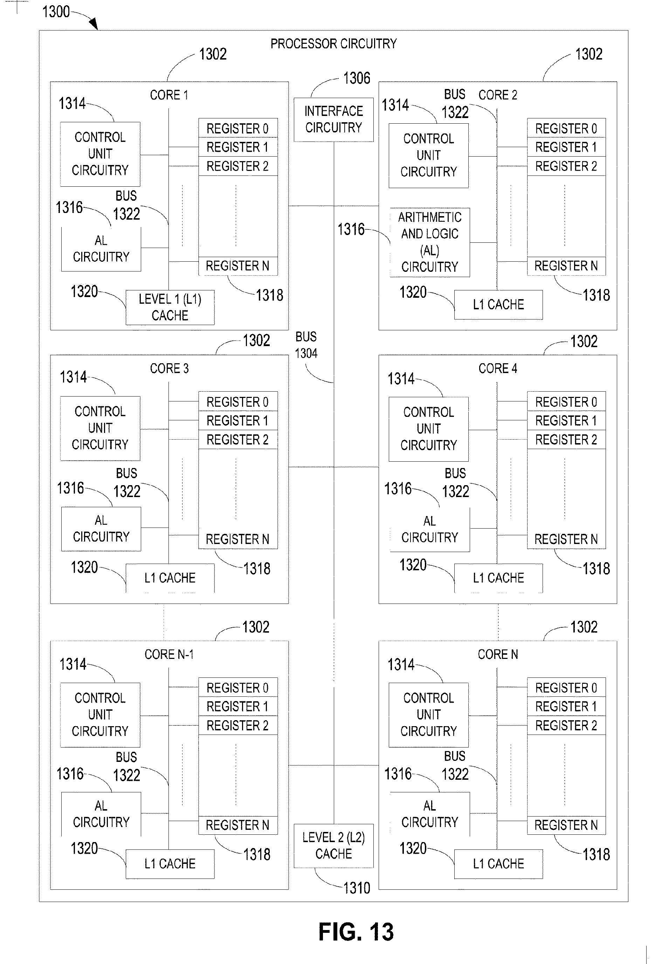

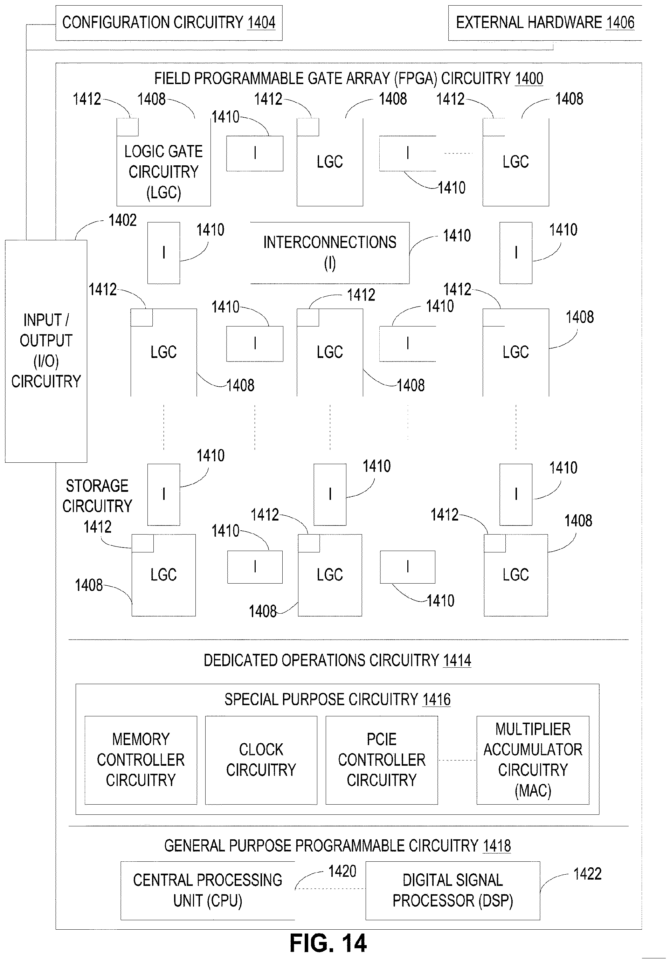

In some examples, the edge node 508 includes means for receiving event data. For example, the means for receiving event data may be implemented by the device interface 618. In some examples, the device interface 618 may be instantiated by processor circuitry such as the example processor circuitry 1212 of FIG. 12. For instance, the device interface 618 may be instantiated by the example general purpose processor circuitry 1300 of FIG. 13 executing machine executable instructions such as that implemented by at least blocks 908 of FIG. 9 and 1104 of FIG. 11. In some examples, the device interface 618 may be instantiated by hardware logic circuitry, which may be implemented by an ASIC or the FPGA circuitry 1400 of FIG. 14 structured to perform operations corresponding to the machine readable instructions. Additionally or alternatively, the device interface 618 may be instantiated by any other combination of hardware, software, and/or firmware. For example, the device interface 618 may be implemented by at least one or more hardware circuits (e.g., processor circuitry, discrete and/or integrated analog and/or digital circuitry, an FPGA, an Application Specific Integrated Circuit (ASIC), a comparator, an operational-amplifier (op-amp), a logic circuit, etc.) structured to execute some or all of the machine readable instructions and/or to perform some or all of the operations corresponding to the machine readable instructions without executing software or firmware, but other structures are likewise appropriate.

The example node firmware metadata 622 includes information relating to the firmware of the edge node A 508. For example, the node firmware metadata 622 can include a firmware version, a firmware filename and/or a checksum of the firmware binary. The example node software metadata 624 includes information relating to the software of the edge node A 508. For example, the node software metadata 624 can include a software version and a software filename. The node timestamp coordination circuitry 626 of the edge node A 508 includes logic for coordinating the current time with the other devices and/or nodes of the edge constellation 500. For example, the node timestamp coordination circuitry 626 uses an NTP protocol to synchronize the clock of the edge node A 508 to Coordinated Universal Time (UTC). As described above, each of the devices and/or nodes of the edge constellation 500 can also synchronize a clock of the device and/or node to UTC. Because the clock time of each of the devices and/or nodes of the edge constellation 500 is synchronized to the same standard (e.g., UTC), synchronizing the clock of the edge node A 508 to UTC coordinates the current clock time of the edge node A 508 to the clock time of the other devices and/or nodes of the edge constellation 500.

In some examples, the edge node 508 includes means for coordinating a clock time. For example, the means for coordinating a clock time may be implemented by the node timestamp coordination circuitry 626. In some examples, the node timestamp coordination circuitry 626 may be instantiated by processor circuitry such as the example processor circuitry 1212 of FIG. 12. For instance, the node timestamp coordination circuitry 626 may be instantiated by the example general purpose processor circuitry 1300 of FIG. 13 executing machine executable instructions such as that implemented by at least blocks 902 of FIG. 9. In some examples, the node timestamp coordination circuitry 626 may be instantiated by hardware logic circuitry, which may be implemented by an ASIC or the FPGA circuitry 1400 of FIG. 14 structured to perform operations corresponding to the machine readable instructions. Additionally or alternatively, the node timestamp coordination circuitry 626 may be instantiated by any other combination of hardware, software, and/or firmware. For example, the node timestamp coordination circuitry 626 may be implemented by at least one or more hardware circuits (e.g., processor circuitry, discrete and/or integrated analog and/or digital circuitry, an FPGA, an Application Specific Integrated Circuit (ASIC), a comparator, an operational-amplifier (op-amp), a logic circuit, etc.) structured to execute some or all of the machine readable instructions and/or to perform some or all of the operations corresponding to the machine readable instructions without executing software or firmware, but other structures are likewise appropriate.

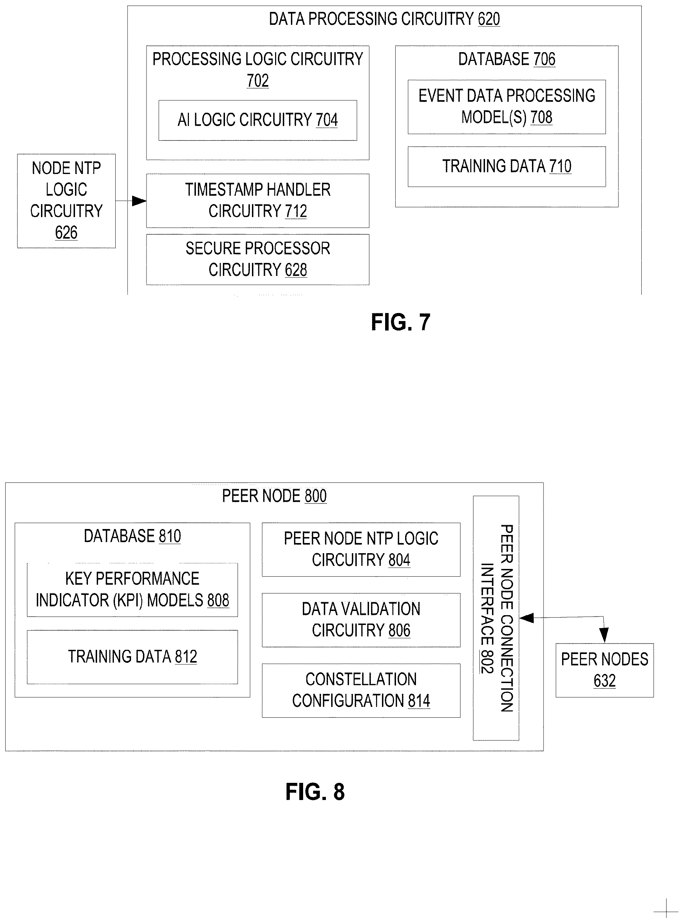

The example data processing circuitry 620 receives the signature, the timestamp, and the event data from the device interface 618 as well as node information from the node firmware metadata 622 and the node software metadata 624 and the current clock time from the node timestamp coordination circuitry 626. The example data processing circuitry 620 processes the event data as explained below in further detail in connection with FIG. 7. As a result of the processing, the example data processing circuitry 620 generates processed event data. The example data processing circuitry 620 includes the example secure processor circuitry 628. The example secure processor circuitry 628 can generate a hash of the end-to-end stack of the edge node A 508. The example end-to-end stack includes information such as, but not limited to, node firmware metadata 222, node software metadata 624, and/or algorithms stored in the data processing circuitry 620. The example secure processor circuitry 628 can generate a hash of the event data for adding to the blockchain 516 once the event data is validated. The example data processing circuitry 620 passes the processed event data, the hash of the event data, and the hash of the end-to-end stack to the request logic circuitry 630. The example request logic circuitry 630 includes instructions for validating the event data. For example, the request logic circuitry 630 includes instructions for peer nodes 632 of the edge constellation 500 to validate the event data prior to the request logic circuitry 630 adding the hash event data to the blockchain 516 via blockchain logic circuitry 634.

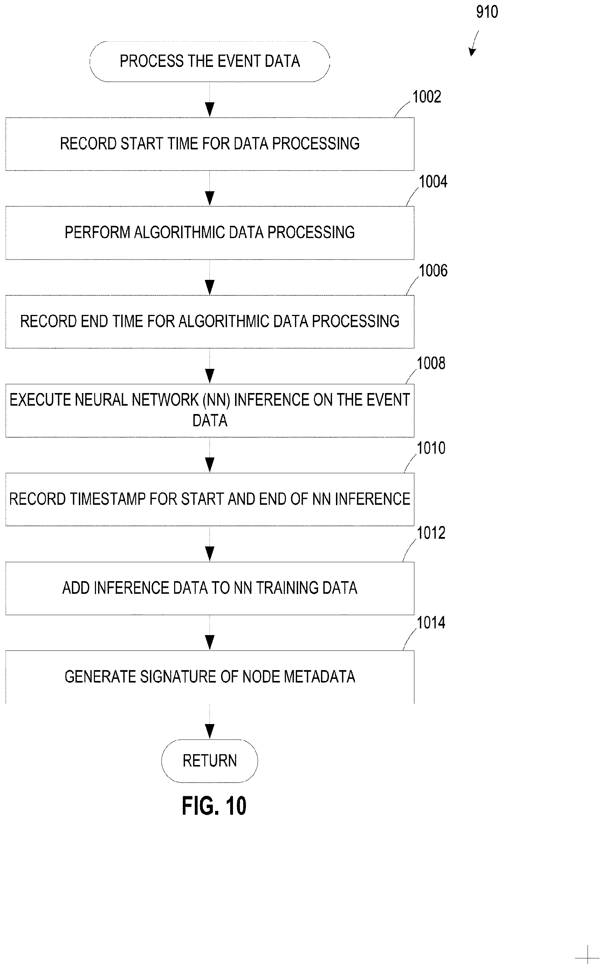

In some examples, the edge node 508 includes means for processing event data. For example, the means for processing event data may be implemented by data processing circuitry 620. In some examples, the data processing circuitry 620 may be instantiated by processor circuitry such as the example processor circuitry 1212 of FIG. 12. For instance, the data processing circuitry 620 may be instantiated by the example general purpose processor circuitry 1300 of FIG. 13 executing machine executable instructions such as that implemented by at least blocks 910 of FIG. 9, 1002, 1004, 1006, 1008, 1010, 1012, and 1014 of FIG. 10. In some examples, the data processing circuitry 620 may be instantiated by hardware logic circuitry, which may be implemented by an ASIC or the FPGA circuitry 1400 of FIG. 14 structured to perform operations corresponding to the machine readable instructions. Additionally or alternatively, the data processing circuitry 620 may be instantiated by any other combination of hardware, software, and/or firmware. For example, the data processing circuitry 620 may be implemented by at least one or more hardware circuits (e.g., processor circuitry, discrete and/or integrated analog and/or digital circuitry, an FPGA, an Application Specific Integrated Circuit (ASIC), a comparator, an operational-amplifier (op-amp), a logic circuit, etc.) structured to execute some or all of the machine readable instructions and/or to perform some or all of the operations corresponding to the machine readable instructions without executing software or firmware, but other structures are likewise appropriate.

In some examples, the edge node 508 includes means for transmitting event data and one or more timestamps. For example, the means for transmitting may be implemented by request logic circuitry 630. In some examples, the request logic circuitry 630 may be instantiated by processor circuitry such as the example processor circuitry 1212 of FIG. 12.For instance, the request logic circuitry 630 may be instantiated by the example general purpose processor circuitry 1300 of FIG. 13 executing machine executable instructions such as that implemented by at least block 912 of FIG. 9. In some examples, the request logic circuitry 630 may be instantiated by hardware logic circuitry, which may be implemented by an ASIC or the FPGA circuitry 1400 of FIG. 14 structured to perform operations corresponding to the machine readable instructions. Additionally or alternatively, the request logic circuitry 630 may be instantiated by any other combination of hardware, software, and/or firmware. For example, the request logic circuitry 630 may be implemented by at least one or more hardware circuits (e.g., processor circuitry, discrete and/or integrated analog and/or digital circuitry, an FPGA, an Application Specific Integrated Circuit (ASIC), a comparator, an operational-amplifier (op-amp), a logic circuit, etc.) structured to execute some or all of the machine readable instructions and/or to perform some or all of the operations corresponding to the machine readable instructions without executing software or firmware, but other structures are likewise appropriate.

In some examples, the edge node 508 includes means for validating event data. For example, the means for validating event data may be implemented by request logic circuitry 630. In some examples, the request logic circuitry 630 may be instantiated by processor circuitry such as the example processor circuitry 1212 of FIG. 12. For instance, the request logic circuitry 630 may be instantiated by the example general purpose processor circuitry 1300 of FIG. 13 executing machine readable instructions such as that implemented by at least block 914 of FIG. 9. In some examples, the request logic circuitry 630 may be instantiated by hardware logic circuitry, which may be implemented by an ASIC or the FPGA circuitry 1400 of FIG. 14 structured to perform operations corresponding to the machine readable instructions. Additionally or alternatively, the request logic circuitry 630 may be instantiated by any other combination of hardware, software, and/or firmware. For example, the request logic circuitry 630 may be implemented by at least one or more hardware circuits (e.g., processor circuitry, discrete and/or integrated analog and/or digital circuitry, an FPGA, an Application Specific Integrated Circuit (ASIC), a comparator, an operational-amplifier (op-amp), a logic circuit, etc.) structured to execute some or all of the machine readable instructions and/or to perform some or all of the operations corresponding to the machine readable instructions without executing software or firmware, but other structures are likewise appropriate.

The example constellation configuration interface 636 of the example edge node A 508 is used by an administrator 640 of the edge constellation 500 to notify the edge node A 508 of the constellation configuration 638 of the edge constellation 500. The administrator 640 can update the constellation configuration 638 periodically or aperiodically. The example constellation configuration 638 includes information indicating that the edge node A 508 is a member of the edge constellation 500. Additionally, the example constellation configuration 638 can include information indicating the peer nodes 632 that are also members of the edge constellation 500. The information in the constellation configuration 638 can include a peer ID and metadata related to each of the peer nodes 632.

The example request logic circuitry 630 can read the constellation configuration 638 to determine the peer nodes 632 included in the edge constellation 500. In some examples, the request logic circuitry 630 reads the constellation configuration 638 each time event data is received to determine the peer nodes 632 included in the edge constellation 500. In other examples, the request logic circuitry 630 reads the constellation configuration to determine the peer nodes 632 included in the edge constellation 500 periodically or aperiodically. After receiving the event data from the data processing circuitry 620, the request logic circuitry 630 sends attestation data to the peer nodes 632 for attestation (e.g., validation) via the node connection interface 616. The attestation data can include the event data, timestamp(s) associated with the event data, the processed event data, timestamp(s) associated with the processed event data, the hash of the end-to-end stack, and a timestamp associated with a transmission time of the attestation data. In some examples, the node connection interface 616 includes in the attestation data a timestamp corresponding to a transmission time of the attestation data. The example peer nodes 632 validate the attestation data by checking the likelihood of the timestamp(s) included in the attestation data as discussed in detail below in connection with FIG. 8.

The example blockchain logic circuitry 634 includes instructions for including event data in the blockchain 516. For example, the instructions in the example blockchain logic circuitry 634 may require that each peer node 632 validates the event data prior to the hash of the event data being added to the blockchain 516. If an example peer node 632 validates the attestation data, the example peer node 632 sends a message to the edge node A 508 indicating that the event data has been validated. For example, the peer node 632 sends a message via the node connection interface 616 to the blockchain logic circuitry 634 including the validation status of the event data. The example blockchain logic circuitry 634 monitors the messages from the peer nodes 632 to confirm if each of the peer nodes 632 validates the attestation data. For example, the blockchain logic circuitry 634 checks if each peer node 632 that was sent the attestation data has sent a message indicating that the event data was validated.

Once the example blockchain logic circuitry 634 confirms that each of the peer nodes 632 validated the attestation data and the hash of the event data is added to the blockchain 516, the blockchain logic circuitry 634 alerts the request logic circuitry 630 that the event data has been validated. As a result of the request logic circuitry 630 being alerted that the event data has been validated, the example request logic circuitry 630 can send the event data to the observer 518. In the example of FIG. 6, the request logic circuitry 630 sends to the observer 518 via the node connection interface 616 the signature, the timestamps associated with the event data, the event data, and the blockchain block associated with the event data. In some examples, the example observer 518 receives additional information such as the processed event data or some of the data may be omitted. In other examples, the example observer 518 requests the blockchain block from the blockchain 516 directly rather than receiving the blockchain block from the edge node A 508.

In some examples, the edge node 508 includes means for adding a hash of event data to a blockchain block. For example, the means for adding the hash of event data to a blockchain block may be implemented by blockchain logic circuitry 634. In some examples, the blockchain logic circuitry 634 may be instantiated by processor circuitry such as the example processor circuitry 1212 of FIG. 12. For instance, the blockchain logic circuitry 634 may be instantiated by the example general purpose processor circuitry 1300 of FIG. 13 executing machine executable instructions such as that implemented by at least block 916 of FIG. 9. In some examples, the blockchain logic circuitry 634 may be instantiated by hardware logic circuitry, which may be implemented by an ASIC or the FPGA circuitry 1400 of FIG. 14 structured to perform operations corresponding to the machine readable instructions. Additionally or alternatively, the blockchain logic circuitry 634 may be instantiated by any other combination of hardware, software, and/or firmware. For example, the blockchain logic circuitry 634 may be implemented by at least one or more hardware circuits (e.g., processor circuitry, discrete and/or integrated analog and/or digital circuitry, an FPGA, an Application Specific Integrated Circuit (ASIC), a comparator, an operational-amplifier (op-amp), a logic circuit, etc.) structured to execute some or all of the machine readable instructions and/or to perform some or all of the operations corresponding to the machine readable instructions without executing software or firmware, but other structures are likewise appropriate.

In some examples, the edge node 508 includes means for transmitting event data to an observer. For example, the means for transmitting the event data to an observer may be implemented by request logic circuitry 630. In some examples, the request logic circuitry 630 may be instantiated by processor circuitry such as the example processor circuitry 1212 of FIG. 12. For instance, the request logic circuitry 630 may be instantiated by the example general purpose processor circuitry 1300 of FIG. 13 executing machine executable instructions such as that implemented by at least block 918 of FIG. 9. In some examples, the request logic circuitry 630 may be instantiated by hardware logic circuitry, which may be implemented by an ASIC or the FPGA circuitry 1400 of FIG. 14 structured to perform operations corresponding to the machine readable instructions. Additionally or alternatively, the request logic circuitry 630 may be instantiated by any other combination of hardware, software, and/or firmware. For example, the request logic circuitry 630 may be implemented by at least one or more hardware circuits (e.g., processor circuitry, discrete and/or integrated analog and/or digital circuitry, an FPGA, an Application Specific Integrated Circuit (ASIC), a comparator, an operational-amplifier (op-amp), a logic circuit, etc.) structured to execute some or all of the machine readable instructions and/or to perform some or all of the operations corresponding to the machine readable instructions without executing software or firmware, but other structures are likewise appropriate.

FIG. 7 illustrates an example block diagram of the example data processing circuitry 620 of FIG. 6 to process the event data received from the edge device A 510. The example data processing circuitry 620 includes processing logic circuitry 702. The example processing logic circuitry 702 includes instructions for performing algorithmic data processing on the event data (e.g., a video frame, sensor data) provided to the data processing circuitry 620. For example, the processing logic circuitry 702 can include instructions for transcoding a video frame. In another example, the processing logic circuitry 702 includes instructions to apply a filter (e.g., a low pass filter) to sensor data. The example processing logic circuitry 702 includes artificial intelligence (AI) logic circuitry 704. The example AI logic circuitry 704 includes instructions for executing a neural network (NN) inference on the event data.

The example data processing circuitry 620 includes database 706. The example database 706 includes event data processing model(s) 708. The example event data processing model(s) 708 include neural network models for processing the event data. For example, the event data processing model(s) 708 can include an object detection model for identifying objects within a video frame. In another example, the event data processing model(s) 708 includes an activity detection model for predicting an activity of a user based on accelerometer sensor data. The example database 706 also includes training data 710. The example training data 710 can be used to train the example event data processing model(s) 708. In some examples, the training data 710 includes historical data. Additionally or alternatively, the event data provided to the example data processing circuitry 620 is added to the training data 710. In this example, the event data processing model(s) 708 can be retrained with the updated training data 710. The example AI logic circuitry 704 uses the event data processing model(s) 708 to execute a neural network inference on the event data. For example, if the event data is an image, the AI logic circuitry 704 might use an object detection event data processing model(s) 708 to identify an object within the image. As an output of the event data processing model(s) 708, processed event data is generated. In the example of object detection, the processed event data includes bounding boxes corresponding to object locations within the image.

The example data processing circuitry 620 of FIG. 7 includes timestamp handler circuitry 712. The example timestamp handler circuitry 712 receives the current clock time from the node timestamp coordination circuitry 626. The example timestamp handler circuitry 712 manages capturing and storing timestamps related to data processing. For example, at each data processing step (e.g., transcoding a video frame, filtering sensor data), the example timestamp handler circuitry 712 captures and stores one or more timestamps associated with the data processing step. In some examples, the timestamp handler circuitry 712 captures and stores a first timestamp associated with the processing logic circuitry 702 beginning the data processing step and a second timestamp associated with the processing logic circuitry 702 completing the data processing step. The example timestamp handler circuitry 712 additionally or alternatively captures and stores timestamps associated with neural network inference data processing steps. For example, the timestamp handler circuitry 712 can capture and store a first timestamp associated with the AI logic circuitry 704 beginning the neural network inference and a second timestamp associated with the AI logic circuitry 704 completing the neural network inference. The example data processing circuitry 620 of FIG. 7 includes the example secure processor circuitry 628. As discussed above in connection with FIG. 6, the example secure processor circuitry 628 can generate a hash of the end-to-end stack of the edge node A 508.

In some examples, the edge node 508 includes means for recording one or more timestamps. For example, the means for recording one or more timestamps may be implemented by timestamp handler circuitry 712 In some examples, the timestamp handler circuitry 712 may be instantiated by processor circuitry such as the example processor circuitry 1212 of FIG. 12. For instance, the timestamp handler circuitry 712 may be instantiated by the example general purpose processor circuitry 1300 of FIG. 13 executing machine executable instructions such as that implemented by at least blocks 1002, 1006, 1010 of FIG. 10. In some examples, the timestamp handler circuitry 712 may be instantiated by hardware logic circuitry, which may be implemented by an ASIC or the FPGA circuitry 1400 of FIG. 14 structured to perform operations corresponding to the machine readable instructions. Additionally or alternatively, the timestamp handler circuitry 712 may be instantiated by any other combination of hardware, software, and/or firmware. For example, the timestamp handler circuitry 712 may be implemented by at least one or more hardware circuits (e.g., processor circuitry, discrete and/or integrated analog and/or digital circuitry, an FPGA, an Application Specific Integrated Circuit (ASIC), a comparator, an operational-amplifier (op-amp), a logic circuit, etc.) structured to execute some or all of the machine readable instructions and/or to perform some or all of the operations corresponding to the machine readable instructions without executing software or firmware, but other structures are likewise appropriate.

FIG. 8 illustrates a block diagram of an example peer node 800 for attesting event data generated by a node (e.g., the edge node A 508) in the edge constellation 500. The example peer node 800 includes a peer node connection interface 802. The example peer node connection interface 802 connects the peer node 800 to a network for communication with the peer nodes 632. The peer nodes 632 can include peer nodes of the edge constellation 500 such as the edge node A 508, the edge node B 512, and/or the edge node C 514. In some examples, the peer node connection interface 802 can be a NIC including circuitry to communicate via a wired or wireless connection with computing devices such as those listed above. The example peer node connection interface 802 receives a data package corresponding to the event data from the peer nodes 632. For example, the edge node A 508 can send the data package corresponding to the event data including attestation data, one or more signatures corresponding to the edge device A 510 and/or the edge node A 508, timestamps corresponding to processing of the event data, and a timestamp corresponding to a transmission time of the data package. The example peer node 800 of FIG. 8 includes peer node NTP logic circuitry 804. The example peer node NTP logic circuitry 804 includes logic for coordinating the current time of the peer node 800 with the other devices and/or nodes of the edge constellation 500. For example, the peer node NTP logic circuitry 804 uses an NTP protocol to synchronize the clock of the peer node 800 to Coordinated Universal Time (UTC). In some examples, the peer node connection interface 802 records a timestamp corresponding to a receive time of the data package sent from the peer nodes 632. For example, at the time the data package is received, the peer node connection interface can receive the current clock time of the peer node 800 from the peer node NTP logic circuitry 804 and generate a timestamp corresponding to the receive time of the data package. In some examples, the peer node connection interface 802 appends the timestamp corresponding to the receive time of the data package to the data package.

The example peer node 800 of FIG. 8 includes data validation circuitry 806. The example data validation circuitry 806 includes instructions to attest the event data sent from one of the peer nodes 632 in the edge constellation 500. For example, the data package can include a timestamp corresponding to a start time and a timestamp corresponding to an end time of executing a neural network inference on the event data. The amount of time between the start timestamp and the end timestamp corresponds an amount of time to execute the neural network inference on the event data. The amount of time to execute the neural network inference on the event data, in some examples, is a key performance indicator (KPI) of the node which executed the neural network inference. In another example, the data package includes a timestamp corresponding to a transmission time of the data package including the event data and a timestamp corresponding to a receive time of the data package. The amount of time between the timestamp corresponding to the transmission time and the timestamp corresponding to the receive time of the data package corresponds to a latency between the sending node and the peer node 800. In some examples, the latency between the sending node and the peer node 800 is a KPI.

The example data validation circuitry 806 can build neural network key performance indicator (KPI) models 808. Each of the KPI models 808 corresponds to a KPI for a specific peer node 632 and can be used to predict a value of the KPI for new event data. The KPI models 808 are stored in a database 810. The database 810 of the peer node 800 also includes training data 812. The example training data 812 can be used to train the KPI models 808. The training data 812 can include historical KPI values. In some examples, the KPI values corresponding to the new event data is added to the training data 812.

The example data validation circuitry 806 can attest the event data sent from one of the peer nodes 632 in the edge constellation 500 using the KPIs associated with the event data such as the time to execute the neural network inference on the event data and/or the latency between the sending node and the peer node 800 and the KPI models 808. For example, the data validation circuitry 806 can use a KPI model 808 corresponding to the peer node 632 that sent the event data to predict a value for the latency KPI. The data validation circuitry 806 can then compare the actual latency KPI to the predicted latency KPI. If the predicted latency KPI and the actual latency KPI are similar (e.g., within 10 percent), the data validation circuitry 806 attests the event data based on the KPI. If the predicted latency KPI and the actual latency KPI are different (e.g., greater than 10 percent difference), the data validation circuitry 806 does not attest the event data based on the KPI. In some examples, the data validation circuitry 806 attests the event data based on more than one KPI. For example, the data validation circuitry 806 can predict a KPI value for the latency KPI and the neural network execution KPI. The example data validation circuitry 806 can compare both predicted KPI values to the actual values and only attest the event data based on the KPI if both actual KPIs are similar (e.g., within 10 percent) to the predicted KPIs.

The example peer node 800 of FIG. 8 includes a constellation configuration 814. The example constellation configuration 814 indicates that the peer node 800 is a member of the edge constellation 500. Additionally, the example constellation configuration 814 can include information indicating the peer nodes 632 that are also members of the edge constellation 500. The information in the constellation configuration 814 can include a peer ID and metadata related to each of the peer nodes 632. In some examples, the data validation circuitry 806 can validate the one or more signatures included in the data package including the event data. For example, the edge node A 508 can send a data package including a signature corresponding to the edge device A 510 and a signature corresponding to the edge node A 508. The example data validation circuitry 806 can confirm the signatures match the information included in the constellation configuration 814.

The example data validation circuitry 806 confirms if the event data was validated. For example, if each actual KPI was similar to the predicted KPI from the KPI models 808 and each signature matched the information in the constellation configuration 814, the example data validation circuitry 806 confirms that the event data is validated (e.g., attested). If the event data is validated, the example data validation circuitry 806 sends a communication to the peer node 632 via the peer node connection interface 802 indicating that the peer node 800 attested the event data. However, if the example data validation circuitry 806 can not confirm that the event data is validated, the example data validation circuitry 806 does not send a communication to the peer node 632 indicating that the peer node 800 attested the data. In some examples, the data validation circuitry 806 can send a communication to the peer node 632 indicating that the event data was not attested (e.g., the event data may be corrupted, the event data was tampered with, etc.).

While an example manner of implementing the edge constellation 500 of FIG. 5 is illustrated in FIG. 6, one or more of the elements, processes, and/or devices illustrated in FIG. 6 may be combined, divided, re-arranged, omitted, eliminated, and/or implemented in any other way. Further, the example edge device A 510, the example edge node A 508, the example unclonable function 602, the example device firmware metadata 604, the example device software metadata 606, the example data generating circuitry 608, the example device timestamp coordination circuitry 610, the example signature logic circuitry 612, the example device connection interface 614, the example node connection interface 616, the example device interface 618, the example data processing circuitry 620, the example node firmware metadata 622, the example node software metadata 624, the example node timestamp coordination circuitry 626, the example secure processor circuitry 628, the example request logic circuitry 630, the example blockchain logic circuitry 634, the example constellation configuration interface 636, the example constellation configuration 638, and/or, more generally, the example edge constellation 500 of FIG. 5, may be implemented by hardware alone or by hardware in combination with software and/or firmware. Thus, for example, any of the example edge device A 510, the example edge node A 508, the example unclonable function 602, the example device firmware metadata 604, the example device software metadata 606, the example data generating circuitry 608, the example device timestamp coordination circuitry 610, the example signature logic circuitry 612, the example device connection interface 614, the example node connection interface 616, the example device interface 618, the example data processing circuitry 620, the example node firmware metadata 622, the example node software metadata 624, the example node timestamp coordination circuitry 626, the example secure processor circuitry 628, the example request logic circuitry 630, the example blockchain logic circuitry 634, the example constellation configuration interface 636, the example constellation configuration 638, and/or, more generally, the example edge constellation 500, could be implemented by processor circuitry, analog circuit(s), digital circuit(s), logic circuit(s), programmable processor(s), programmable microcontroller(s), graphics processing unit(s) (GPU(s)), digital signal processor(s) (DSP(s)), application specific integrated circuit(s) (ASIC(s)), programmable logic device(s) (PLD(s)), and/or field programmable logic device(s) (FPLD(s)) such as Field Programmable Gate Arrays (FPGAs). Further still, the example edge constellation 500 of FIG. 5 may include one or more elements, processes, and/or devices in addition to, or instead of, those illustrated in FIG. 6, and/or may include more than one of any or all of the illustrated elements, processes and devices.

While an example manner of implementing the data processing circuitry 620 of FIG. 6 is illustrated in FIG. 7, one or more of the elements, processes, and/or devices illustrated in FIG. 7 may be combined, divided, re-arranged, omitted, eliminated, and/or implemented in any other way. Further, the example processing logic circuitry 702, the example AI logic circuitry 704, the example database 706, the example event data processing model(s) 708, the example training data 710, the example timestamp handler circuitry 712, the example secure processor circuitry 628, and/or, more generally, the example data processing circuitry 620 of FIG. 6, may be implemented by hardware alone or by hardware in combination with software and/or firmware. Thus, for example, any of the example processing logic circuitry 702, the example AI logic circuitry 704, the example database 706, the example event data processing model(s) 708, the example training data 710, the example timestamp handler circuitry 712, the example secure processor circuitry 628, and/or, more generally, the example data processing circuitry 620, could be implemented by processor circuitry, analog circuit(s), digital circuit(s), logic circuit(s), programmable processor(s), programmable microcontroller(s), graphics processing unit(s) (GPU(s)), digital signal processor(s) (DSP(s)), application specific integrated circuit(s) (ASIC(s)), programmable logic device(s) (PLD(s)), and/or field programmable logic device(s) (FPLD(s)) such as Field Programmable Gate Arrays (FPGAs). Further still, the example data processing circuitry 620 of FIG. 6 may include one or more elements, processes, and/or devices in addition to, or instead of, those illustrated in FIG. 7, and/or may include more than one of any or all of the illustrated elements, processes and devices.

Flowcharts representative of example hardware logic circuitry, machine readable instructions, hardware implemented state machines, and/or any combination thereof for implementing the edge constellation 500 of FIG. 5 is shown in FIGS. 9-11. The machine readable instructions may be one or more executable programs or portion(s) of an executable program for execution by processor circuitry, such as the processor circuitry 1212 shown in the example processor platform 1200 discussed below in connection with FIG. 12 and/or the example processor circuitry discussed below in connection with FIGS. 13 and/or 14. The program may be embodied in software stored on one or more non-transitory computer readable storage media such as a compact disk (CD), a floppy disk, a hard disk drive (HDD), a solid-state drive (SSD), a digital versatile disk (DVD), a Blu-ray disk, a volatile memory (e.g., Random Access Memory (RAM) of any type, etc.), or a non-volatile memory (e.g., electronically erasable programmable read-only memory (EEPROM), FLASH memory, an HDD, an SSD, etc.) associated with processor circuitry located in one or more hardware devices, but the entire program and/or parts thereof could alternatively be executed by one or more hardware devices other than the processor circuitry and/or embodied in firmware or dedicated hardware. The machine readable instructions may be distributed across multiple hardware devices and/or executed by two or more hardware devices (e.g., a server and a client hardware device). For example, the client hardware device may be implemented by an endpoint client hardware device (e.g., a hardware device associated with a user) or an intermediate client hardware device (e.g., a radio access network (RAN) gateway that may facilitate communication between a server and an endpoint client hardware device). Similarly, the non-transitory computer readable storage media may include one or more mediums located in one or more hardware devices. Further, although the example program is described with reference to the flowcharts illustrated in FIGS. 9-11, many other methods of implementing the example edge constellation 500 may alternatively be used. For example, the order of execution of the blocks may be changed, and/or some of the blocks described may be changed, eliminated, or combined. Additionally or alternatively, any or all of the blocks may be implemented by one or more hardware circuits (e.g., processor circuitry, discrete and/or integrated analog and/or digital circuitry, an FPGA, an ASIC, a comparator, an operational-amplifier (op-amp), a logic circuit, etc.) structured to perform the corresponding operation without executing software or firmware. The processor circuitry may be distributed in different network locations and/or local to one or more hardware devices (e.g., a single-core processor (e.g., a single core central processor unit (CPU)), a multi-core processor (e.g., a multi-core CPU), etc.) in a single machine, multiple processors distributed across multiple servers of a server rack, multiple processors distributed across one or more server racks, a CPU and/or a FPGA located in the same package (e.g., the same integrated circuit (IC) package or in two or more separate housings, etc).

The machine readable instructions described herein may be stored in one or more of a compressed format, an encrypted format, a fragmented format, a compiled format, an executable format, a packaged format, etc. Machine readable instructions as described herein may be stored as data or a data structure (e.g., as portions of instructions, code, representations of code, etc.) that may be utilized to create, manufacture, and/or produce machine executable instructions. For example, the machine readable instructions may be fragmented and stored on one or more storage devices and/or computing devices (e.g., servers) located at the same or different locations of a network or collection of networks (e.g., in the cloud, in edge devices, etc.). The machine readable instructions may require one or more of installation, modification, adaptation, updating, combining, supplementing, configuring, decryption, decompression, unpacking, distribution, reassignment, compilation, etc., in order to make them directly readable, interpretable, and/or executable by a computing device and/or other machine. For example, the machine readable instructions may be stored in multiple parts, which are individually compressed, encrypted, and/or stored on separate computing devices, wherein the parts when decrypted, decompressed, and/or combined form a set of machine executable instructions that implement one or more operations that may together form a program such as that described herein.

In another example, the machine readable instructions may be stored in a state in which they may be read by processor circuitry, but require addition of a library (e.g., a dynamic link library (DLL)), a software development kit (SDK), an application programming interface (API), etc., in order to execute the machine readable instructions on a particular computing device or other device. In another example, the machine readable instructions may need to be configured (e.g., settings stored, data input, network addresses recorded, etc.) before the machine readable instructions and/or the corresponding program(s) can be executed in whole or in part. Thus, machine readable media, as used herein, may include machine readable instructions and/or program(s) regardless of the particular format or state of the machine readable instructions and/or program(s) when stored or otherwise at rest or in transit.

The machine readable instructions described herein can be represented by any past, present, or future instruction language, scripting language, programming language, etc. For example, the machine readable instructions may be represented using any of the following languages: C, C++, Java, C#, Perl, Python, JavaScript, HyperText Markup Language (HTML), Structured Query Language (SQL), Swift, etc.

As mentioned above, the example operations of FIGS. 9-11 may be implemented using executable instructions (e.g., computer and/or machine readable instructions) stored on one or more non-transitory computer and/or machine readable media such as optical storage devices, magnetic storage devices, an HDD, a flash memory, a read-only memory (ROM), a CD, a DVD, a cache, a RAM of any type, a register, and/or any other storage device or storage disk in which information is stored for any duration (e.g., for extended time periods, permanently, for brief instances, for temporarily buffering, and/or for caching of the information). As used herein, the terms non-transitory computer readable medium and non-transitory computer readable storage medium is expressly defined to include any type of computer readable storage device and/or storage disk and to exclude propagating signals and to exclude transmission media.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc., may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, or (7) A with B and with C. As used herein in the context of describing structures, components, items, objects and/or things, the phrase "at least one of A and B" is intended to refer to implementations including any of (1) at least one A, (2) at least one B, or (3) at least one A and at least one B. Similarly, as used herein in the context of describing structures, components, items, objects and/or things, the phrase "at least one of A or B" is intended to refer to implementations including any of (1) at least one A, (2) at least one B, or (3) at least one A and at least one B. As used herein in the context of describing the performance or execution of processes, instructions, actions, activities and/or steps, the phrase "at least one of A and B" is intended to refer to implementations including any of (1) at least one A, (2) at least one B, or (3) at least one A and at least one B. Similarly, as used herein in the context of describing the performance or execution of processes, instructions, actions, activities and/or steps, the phrase "at least one of A or B" is intended to refer to implementations including any of (1) at least one A, (2) at least one B, or (3) at least one A and at least one B.

As used herein, singular references (e.g., "a", "an", "first", "second", etc.) do not exclude a plurality. The term "a" or "an" object, as used herein, refers to one or more of that object. The terms "a" (or "an"), "one or more", and "at least one" are used interchangeably herein. Furthermore, although individually listed, a plurality of means, elements or method actions may be implemented by, e.g., the same entity or object. Additionally, although individual features may be included in different examples or claims, these may possibly be combined, and the inclusion in different examples or claims does not imply that a combination of features is not feasible and/or advantageous.

FIG. 9 is a flowchart representative of example machine readable instructions and/or example operations 900 that may be executed and/or instantiated by processor circuitry to validate event data. The machine readable instructions and/or operations 900 of FIG. 9 begin at block 902, at which the device timestamp coordination circuitry 610 synchronizes the clock time of the example edge device A 510 (FIG. 5) with the other devices and/or nodes of the example edge constellation 500 (FIG. 5). For example, the device timestamp coordination circuitry 610 coordinates the current clock time of the example edge device A 510 using an NTP protocol to synchronize the clock of the edge device A 510 to UTC. At block 904, the example data generating circuitry 608 generates event data (e.g., image data, sensor data). For example, if the example edge device A 510 is a camera, the example data generating circuitry 608 captures image data. In another example, if the example edge device A 510 is a temperature sensor, the example data generating circuitry 608 reads temperature sensor data at block 904. At block 906, the example signature logic circuitry 612 generates a signature associated with the event data (e.g., image data, sensor data). For example, the signature logic circuitry 612 generates a signature including information (e.g., metadata) related to the example edge device A 510 and a timestamp associated with the generation of the event data. At block 908, the example device connection interface 614 transmits the event data to the example edge node A 508. For example, the device connection interface 614 transmits the event data and the associated signature to the edge node A 508. The example device interface 618 of the edge node A 508 receives the event data via the node connection interface 616.

At block 910, the example data processing circuitry 620 processes the event data. Example instructions that may be used to implement block 910 are discussed below in detail in connection with FIG. 10. As a result of block 910, the example data processing circuitry 620 generates processed event data and additional timestamps associated with processing of the event data. At block 912, the example request logic circuitry 630 transmits via the example node connection interface 616 the event data and/or processed event data, the signature, and one or more timestamps to peer nodes 632 of the edge constellation 500 for attestation. For example, the request logic circuitry 630 transmits the attestation data to the edge node B 512 and the edge node C 514. At block 914, the example request logic circuitry 630 checks if the event data has been attested. For example, the request logic circuitry 630 checks if each peer node 632 sent the attestation data has sent a communication indicating whether the event data was attested by the peer node 632. If each peer node 632 sent the attestation data has sent a communication indicating that the event data was attested, the request logic circuitry 630 notifies the blockchain logic circuitry 634 that the edge constellation 500 has agreed that the event data is verified (block 914: YES) and the process continues at block 916. At block 916, the example blockchain block logic circuitry 634 adds the event data to the blockchain 516. For example, the blockchain block logic circuitry 634 adds a block to the blockchain 516 of the edge constellation 500 corresponding to the event data. At block 918, the example request logic circuitry 630 sends the attested event data to an observer (e.g., the observer 518 of FIG. 5). For example, the request logic circuitry 630 can transmit the event data, the processed event data, the signature and/or the timestamps to the observer 518 via the node connection interface 616. The process of FIG. 9 then ends. If any of the peer nodes 632 sent the attestation data do not send a communication to the request logic circuitry 630 indicating that the event was attested (block 914: NO), the edge constellation does not agree that the event data is verified and the process of FIG. 9 ends.

FIG. 10 is a flowchart representative of example machine readable instructions and/or example operations 910 that may be executed and/or instantiated by processor circuitry to process event data. The machine readable instructions and/or operations 910 of FIG. 9 begin at block 1002, at which the timestamp handler circuitry 712 records a start time for data processing. For example, the timestamp handler circuitry 712 receives the current clock time of the edge node A 508 from the node timestamp coordination circuitry 626 and stores the clock time in a timestamp associated with the start of the data processing. At block 1004, the example processing logic circuitry 702 performs algorithmic data processing on the event data. For example, the processing logic circuitry 702 can transcode a video frame using encoder logic. In another example, the processing logic circuitry filters sensor data using a low pass filter. At block 1006, the example timestamp handler circuitry 712 records an end time for the algorithmic data processing. For example, the timestamp handler circuitry 712 receives the current clock time of the edge node A 508 from the node timestamp coordination circuitry 626 and stores the clock time in a timestamp associated with the end of the algorithmic data processing. In some examples, the timestamp associated with the end of the algorithmic data processing is also associated with a start of the neural network inference data processing.

At block 1008, the AI logic circuitry 704 executes a NN inference on the event data. For example, if the edge device A 510 generates accelerometer sensor data, the AI logic circuitry 704 can execute a NN activity detection model to predict an activity of a user based on the accelerometer sensor data. As a result of the process of block 1008, inference data corresponding to the event data is generated. At block 1010, the example timestamp handler circuitry 712 records an end time for the NN inference execution. For example, the timestamp handler circuitry 712 receives the current clock time of the edge node A 508 from the node timestamp coordination circuitry 626 and stores the clock time in a timestamp associated with the end of the NN inference execution on the event data. At block 1012, the example AI logic circuitry 704 adds the inference data corresponding to the event data to the training data 710. For example, the AI logic circuitry 704 can add the newly generated inference data to the training data 710 for periodic or aperiodic updating of the event data processing model(s) 708. At block 1014, the example secure processor circuitry 628 generates signature corresponding to the event data including a hash of the end-to-end stack of the edge node A 508. The example end-to-end stack includes information such as, but not limited to, node firmware metadata 222, node software metadata 624, and/or algorithms stored in the data processing circuitry 620. The process of FIG. 10 then ends and returns to block 912 of FIG. 9.

FIG. 11 is a flowchart representative of example machine readable instructions and/or example operations 1100 that may be executed and/or instantiated by processor circuitry of the peer node 800 to attest event data within the edge constellation 500. The machine readable instructions and/or operations 1100 of FIG. 11 begin at block 1102, at which the example peer node NTP logic circuitry 804 synchronizes the clock time of the peer node 800. For example, the peer node NTP logic circuitry 804 can coordinate the current time of the peer node 800 with the other devices and/or nodes of the edge constellation 500 by synchronizing the clock of the peer node 800 to Coordinated Universal Time (UTC). At block 1104, the example peer node connection interface 802 of the peer node 800 receives event data to be attested from a peer node 632. For example, the peer node 632 may be edge node A 508 and the event data may include processed event data, one or more signatures, and one or more timestamps. Additionally, the example peer node connection interface 802 can record a timestamp corresponding to a receive time of the event data sent from the one of the peer nodes 632.

At block 1106, the example data validation circuitry 806 uses the KPI models 808 to predict one or more KPIs corresponding to the event data. For example, the data validation circuitry 806 can select one of the KPI models 808 corresponding to the peer node 632 and the KPI of interest (e.g., the latency KPI, the neural network execution KPI, etc.). At block 1108, the example data validation circuitry 806 can determine actual KPI values based on the timestamps sent from the one of the peer nodes 632. For example, the data validation circuitry 806 can calculate a time between the transmission timestamp and the receive timestamp to determine an actual latency KPI corresponding to the event data. At block 1110, the example data validation circuitry 806 compares the actual KPI(s) calculated at block 1108 with the predicted KPI(s) determined at block 1106. If the predicted latency KPI and the actual latency KPI are similar (e.g., within 10 percent), the data validation circuitry 806 can attest the event data based on the KPI. If the predicted latency KPI and the actual latency KPI are different (e.g., greater than 10 percent difference), the data validation circuitry 806 cannot attest the event data based on the KPI. At block 1112, the example data validation circuitry 806 checks the metadata included in the signature(s) sent with the event data. For example, the signature(s) can include metadata corresponding to an edge node and/or an edge device associated with the event data. The example data validation circuitry 806 can compare the metadata to the constellation configuration 814 to confirm the identity of the edge node that sent the event data.

At block 1114, the example data validation circuitry 806 checks if the event data can be attested. For example, the example data validation circuitry 806 checks the output of blocks 1110 and 1112 to see if the actual KPI(s) and the metadata were validated. If the event data can be attested (block 1114: YES), the process continues at block 1116. At block 1116, the example data validation circuitry 806 sends a communication to the edge node that sent the event data indicating that the event data is attested by the peer node 800. The process of FIG. 11 then ends. If the event data cannot be attested (block 1114: NO), the process of FIG. 11 ends.

FIG. 12 is a block diagram of an example processor platform 1200 structured to execute and/or instantiate the machine readable instructions and/or operations of FIGS. 9-11 to implement the edge constellation 500 of FIG. 5. The processor platform 1200 can be, for example, a server, a personal computer, a workstation, a self-learning machine (e.g., a neural network), a mobile device (e.g., a cell phone, a smart phone, a tablet such as an iPad^{™}), a personal digital assistant (PDA), an Internet appliance, a DVD player, a CD player, a digital video recorder, a Blu-ray player, a gaming console, a personal video recorder, a set top box, a headset (e.g., an augmented reality (AR) headset, a virtual reality (VR) headset, etc.) or other wearable device, or any other type of computing device.

The processor platform 1200 of the illustrated example includes processor circuitry 1212. The processor circuitry 1212 of the illustrated example is hardware. For example, the processor circuitry 1212 can be implemented by one or more integrated circuits, logic circuits, FPGAs microprocessors, CPUs, GPUs, DSPs, and/or microcontrollers from any desired family or manufacturer. The processor circuitry 1212 may be implemented by one or more semiconductor based (e.g., silicon based) devices. In this example, the processor circuitry 1212 implements the unclonable function 602, the data generating circuitry 608, the device timestamp coordination circuitry 610, the signature logic circuitry 612, the device connection interface 614, the node connection interface 616, the device interface 618, the data processing circuitry 620, the secure processor circuitry 628, the node timestamp coordination circuitry 626, the request logic circuitry 630, the blockchain logic circuitry 634, and the constellation configuration interface 636.

The processor circuitry 1212 of the illustrated example includes a local memory 1213 (e.g., a cache, registers, etc.). The processor circuitry 1212 of the illustrated example is in communication with a main memory including a volatile memory 1214 and a non-volatile memory 1216 by a bus 1218. The volatile memory 1214 may be implemented by Synchronous Dynamic Random Access Memory (SDRAM), Dynamic Random Access Memory (DRAM), RAMBUS^{®} Dynamic Random Access Memory (RDRAM^{®}), and/or any other type of RAM device. The non-volatile memory 1216 may be implemented by flash memory and/or any other desired type of memory device. Access to the main memory 1214, 1216 of the illustrated example is controlled by a memory controller 1217.

The processor platform 1200 of the illustrated example also includes interface circuitry 1220. The interface circuitry 1220 may be implemented by hardware in accordance with any type of interface standard, such as an Ethernet interface, a universal serial bus (USB) interface, a Bluetooth^{®} interface, a near field communication (NFC) interface, a Peripheral Component Interconnect (PCI) interface, and/or a Peripheral Component Interconnect Express (PCIe) interface.

In the illustrated example, one or more input devices 1222 are connected to the interface circuitry 1220. The input device(s) 1222 permit(s) a user to enter data and/or commands into the processor circuitry 1212. The input device(s) 1222 can be implemented by, for example, an audio sensor, a microphone, a camera (still or video), a keyboard, a button, a mouse, a touchscreen, a track-pad, a trackball, an isopoint device, and/or a voice recognition system.

One or more output devices 1224 are also connected to the interface circuitry 1220 of the illustrated example. The output device(s) 1224 can be implemented, for example, by display devices (e.g., a light emitting diode (LED), an organic light emitting diode (OLED), a liquid crystal display (LCD), a cathode ray tube (CRT) display, an in-place switching (IPS) display, a touchscreen, etc.), a tactile output device, a printer, and/or speaker. The interface circuitry 1220 of the illustrated example, thus, typically includes a graphics driver card, a graphics driver chip, and/or graphics processor circuitry such as a GPU.

The interface circuitry 1220 of the illustrated example also includes a communication device such as a transmitter, a receiver, a transceiver, a modem, a residential gateway, a wireless access point, and/or a network interface to facilitate exchange of data with external machines (e.g., computing devices of any kind) by a network 1226. The communication can be by, for example, an Ethernet connection, a digital subscriber line (DSL) connection, a telephone line connection, a coaxial cable system, a satellite system, a line-of-site wireless system, a cellular telephone system, an optical connection, etc.

The processor platform 1200 of the illustrated example also includes one or more mass storage devices 1228 to store software and/or data. Examples of such mass storage devices 1228 include magnetic storage devices, optical storage devices, floppy disk drives, HDDs, CDs, Blu-ray disk drives, redundant array of independent disks (RAID) systems, solid state storage devices such as flash memory devices, and DVD drives.

The machine executable instructions 1232, which may be implemented by the machine readable instructions of FIGS. 9-11 may be stored in the mass storage device 1228, in the volatile memory 1214, in the non-volatile memory 1216, and/or on a removable non-transitory computer readable storage medium such as a CD or DVD

FIG. 13 is a block diagram of an example implementation of the processor circuitry 1212 of FIG. 12. In this example, the processor circuitry 1212 of FIG. 12 is implemented by a general purpose microprocessor 1300. The general purpose microprocessor circuitry 1300 executes some or all of the machine readable instructions of the flowcharts of FIGS. 8-11 to effectively instantiate the circuitry of FIG. 5 as logic circuits to perform the operations corresponding to those machine readable instructions. In some such examples, the circuitry of FIG. 5 is instantiated by the hardware circuits of the microprocessor 1300 in combination with the instructions. For example, the microprocessor 1300 may implement multi-core hardware circuitry such as a CPU, a DSP, a GPU, an XPU, etc. Although it may include any number of example cores 1302 (e.g., 1 core), the microprocessor 1300 of this example is a multi-core semiconductor device including N cores. The cores 1302 of the microprocessor 1300 may operate independently or may cooperate to execute machine readable instructions. For example, machine code corresponding to a firmware program, an embedded software program, or a software program may be executed by one of the cores 1302 or may be executed by multiple ones of the cores 1302 at the same or different times. In some examples, the machine code corresponding to the firmware program, the embedded software program, or the software program is split into threads and executed in parallel by two or more of the cores 1302. The software program may correspond to a portion or all of the machine readable instructions and/or operations represented by the flowcharts of FIGS. 9-11.

The cores 1302 may communicate by an example bus 1304. In some examples, the first bus 1304 may implement a communication bus to effectuate communication associated with one(s) of the cores 1302. For example, the first bus 1304 may implement at least one of an Inter-Integrated Circuit (I2C) bus, a Serial Peripheral Interface (SPI) bus, a PCI bus, or a PCIe bus. Additionally or alternatively, the first bus 1304 may implement any other type of computing or electrical bus. The cores 1302 may obtain data, instructions, and/or signals from one or more external devices by example interface circuitry 1306. The cores 1302 may output data, instructions, and/or signals to the one or more external devices by the interface circuitry 1306. Although the cores 1302 of this example include example local memory 1320 (e.g., Level 1 (LI) cache that may be split into an L1 data cache and an L1 instruction cache), the microprocessor 1300 also includes example shared memory 1310 that may be shared by the cores (e.g., Level 2 (L2_ cache)) for high-speed access to data and/or instructions. Data and/or instructions may be transferred (e.g., shared) by writing to and/or reading from the shared memory 1310. The local memory 1320 of each of the cores 1302 and the shared memory 1310 may be part of a hierarchy of storage devices including multiple levels of cache memory and the main memory (e.g., the main memory 1214, 1216 of FIG. 12). Typically, higher levels of memory in the hierarchy exhibit lower access time and have smaller storage capacity than lower levels of memory. Changes in the various levels of the cache hierarchy are managed (e.g., coordinated) by a cache coherency policy.

Each core 1302 may be referred to as a CPU, DSP, GPU, etc., or any other type of hardware circuitry. Each core 1302 includes control unit circuitry 1314, arithmetic and logic (AL) circuitry (sometimes referred to as an ALU) 1316, a plurality of registers 1318, the L1 cache 1320, and a secondbus 1322. Other structures may be present. For example, each core 1302 may include vector unit circuitry, single instruction multiple data (SIMD) unit circuitry, load/store unit (LSU) circuitry, branch/jump unit circuitry, floating-point unit (FPU) circuitry, etc. The control unit circuitry 1314 includes semiconductor-based circuits structured to control (e.g., coordinate) data movement within the corresponding core 1302. The AL circuitry 1316 includes semiconductor-based circuits structured to perform one or more mathematic and/or logic operations on the data within the corresponding core 1302. The AL circuitry 1316 of some examples performs integer based operations. In other examples, the AL circuitry 1316 also performs floating point operations. In yet other examples, the AL circuitry 1316 may include first AL circuitry that performs integer based operations and second AL circuitry that performs floating point operations. In some examples, the AL circuitry 1316 may be referred to as an Arithmetic Logic Unit (ALU). The registers 1318 are semiconductor-based structures to store data and/or instructions such as results of one or more of the operations performed by the AL circuitry 1316 of the corresponding core 1302. For example, the registers 1318 may include vector register(s), SIMD register(s), general purpose register(s), flag register(s), segment register(s), machine specific register(s), instruction pointer register(s), control register(s), debug register(s), memory management register(s), machine check register(s), etc. The registers 1318 may be arranged in a bank as shown in FIG. 13. Alternatively, the registers 1318 may be organized in any other arrangement, format, or structure including distributed throughout the core 1302 to shorten access time. The second bus 1322 may implement at least one of an I2C bus, a SPI bus, a PCI bus, or a PCIe bus

Each core 1302 and/or, more generally, the microprocessor 1300 may include additional and/or alternate structures to those shown and described above. For example, one or more clock circuits, one or more power supplies, one or more power gates, one or more cache home agents (CHAs), one or more converged/common mesh stops (CMSs), one or more shifters (e.g., barrel shifter(s)) and/or other circuitry may be present. The microprocessor 1300 is a semiconductor device fabricated to include many transistors interconnected to implement the structures described above in one or more integrated circuits (ICs) contained in one or more packages. The processor circuitry may include and/or cooperate with one or more accelerators. In some examples, accelerators are implemented by logic circuitry to perform certain tasks more quickly and/or efficiently than can be done by a general purpose processor. Examples of accelerators include ASICs and FPGAs such as those discussed herein. A GPU or other programmable device can also be an accelerator. Accelerators may be on-board the processor circuitry, in the same chip package as the processor circuitry and/or in one or more separate packages from the processor circuitry.

FIG. 14 is a block diagram of another example implementation of the processor circuitry 1212 of FIG. 12. In this example, the processor circuitry 1212 is implemented by FPGA circuitry 1400. The FPGA circuitry 1400 can be used, for example, to perform operations that could otherwise be performed by the example microprocessor 1300 of FIG. 13 executing corresponding machine readable instructions. However, once configured, the FPGA circuitry 1400 instantiates the machine readable instructions in hardware and, thus, can often execute the operations faster than they could be performed by a general purpose microprocessor executing the corresponding software.

More specifically, in contrast to the microprocessor 1300 of FIG. 13 described above (which is a general purpose device that may be programmed to execute some or all of the machine readable instructions represented by the flowcharts of FIGS. 9-11 but whose interconnections and logic circuitry are fixed once fabricated), the FPGA circuitry 1400 of the example of FIG. 14 includes interconnections and logic circuitry that may be configured and/or interconnected in different ways after fabrication to instantiate, for example, some or all of the machine readable instructions represented by the flowcharts of FIGS. 9-11. In particular, the FPGA 1400 may be thought of as an array of logic gates, interconnections, and switches. The switches can be programmed to change how the logic gates are interconnected by the interconnections, effectively forming one or more dedicated logic circuits (unless and until the FPGA circuitry 1400 is reprogrammed). The configured logic circuits enable the logic gates to cooperate in different ways to perform different operations on data received by input circuitry. Those operations may correspond to some or all of the software represented by the flowcharts of FIGS. 9-11. As such, the FPGA circuitry 1400 may be structured to effectively instantiate some or all of the machine readable instructions of the flowcharts of FIGS. 9-11 as dedicated logic circuits to perform the operations corresponding to those software instructions in a dedicated manner analogous to an ASIC. Therefore, the FPGA circuitry 1400 may perform the operations corresponding to the some or all of the machine readable instructions of FIGS. 9-11 faster than the general purpose microprocessor can execute the same.

In the example of FIG. 14, the FPGA circuitry 1400 is structured to be programmed (and/or reprogrammed one or more times) by an end user by a hardware description language (HDL) such as Verilog. The FPGA circuitry 1400 of FIG. 14, includes example input/output (I/O) circuitry 1402 to obtain and/or output data to/from example configuration circuitry 1404 and/or external hardware (e.g., external hardware circuitry) 1406. For example, the configuration circuitry 1404 may implement interface circuitry that may obtain machine readable instructions to configure the FPGA circuitry 1400, or portion(s) thereof. In some such examples, the configuration circuitry 1404 may obtain the machine readable instructions from a user, a machine (e.g., hardware circuitry (e.g., programmed or dedicated circuitry) that may implement an Artificial Intelligence/Machine Learning (AI/ML) model to generate the instructions), etc. In some examples, the external hardware 1406 may implement the microprocessor 1300 of FIG. 13. The FPGA circuitry 1400 also includes an array of example logic gate circuitry 1408, a plurality of example configurable interconnections 1410, and example storage circuitry 1412. The logic gate circuitry 1408 and interconnections 1410 are configurable to instantiate one or more operations that may correspond to at least some of the machine readable instructions of FIGS. 9-11 and/or other desired operations. The logic gate circuitry1408 shown in FIG. 14 is fabricated in groups or blocks. Each block includes semiconductor-based electrical structures that may be configured into logic circuits. In some examples, the electrical structures include logic gates (e.g., And gates, Or gates, Nor gates, etc.) that provide basic building blocks for logic circuits. Electrically controllable switches (e.g., transistors) are present within each of the logic gate circuitry 1408 to enable configuration of the electrical structures and/or the logic gates to form circuits to perform desired operations. The logic gate circuitry 1408 may include other electrical structures such as look-up tables (LUTs), registers (e.g., flip-flops or latches), multiplexers, etc.

The interconnections 1410 of the illustrated example are conductive pathways, traces, vias, or the like that may include electrically controllable switches (e.g., transistors) whose state can be changed by programming (e.g., using an HDL instruction language) to activate or deactivate one or more connections between one or more of the logic gate circuitry 1408 to program desired logic circuits.

The storage circuitry 1412 of the illustrated example is structured to store result(s) of the one or more of the operations performed by corresponding logic gates. The storage circuitry 1412 may be implemented by registers or the like. In the illustrated example, the storage circuitry 1412 is distributed amongst the logic gate circuitry 1408 to facilitate access and increase execution speed.

The example FPGA circuitry 1400 of FIG. 14 also includes example Dedicated Operations Circuitry 1414. In this example, the Dedicated Operations Circuitry 1414 includes special purpose circuitry 1416 that may be invoked to implement commonly used functions to avoid the need to program those functions in the field. Examples of such special purpose circuitry 1416 include memory (e.g., DRAM) controller circuitry, PCIe controller circuitry, clock circuitry, transceiver circuitry, memory, and multiplier-accumulator circuitry. Other types of special purpose circuitry may be present. In some examples, the FPGA circuitry 1400 may also include example general purpose programmable circuitry 1418 such as an example CPU 1420 and/or an example DSP 1422. Other general purpose programmable circuitry 1418 may additionally or alternatively be present such as a GPU, an XPU, etc., that can be programmed to perform other operations.

Although FIGS. 13 and 14 illustrate two example implementations of the processor circuitry 1212 of FIG. 12, many other approaches are contemplated. For example, as mentioned above, modern FPGA circuitry may include an on-board CPU, such as one or more of the example CPU 1420 of FIG. 14. Therefore, the processor circuitry 1212 of FIG. 12 may additionally be implemented by combining the example microprocessor 1300 of FIG. 13 and the example FPGA circuitry 1400 of FIG. 14. In some such hybrid examples, a first portion of the machine readable instructions represented by the flowcharts of FIGS. 9-11 may be executed by one or more of the cores 1302 of FIG. 13, a second portion of the machine readable instructions represented by the flowcharts of FIGS. 9-11 may be executed by the FPGA circuitry 1400 of FIG. 14, and/or a third portion of the machine readable instructions represented by the flowcharts of FIGS. 9-11 may be executed by an ASIC. It should be understood that some or all of the circuitry of FIG. 5 may, thus, be instantiated at the same or different times. Some or all of the circuitry may be instantiated, for example, in one or more threads executing concurrently and/or in series. Moreover, in some examples, some or all of the circuitry of FIG. 5 may be implemented within one or more virtual machines and/or containers executing on the microprocessor.

In some examples, the processor circuitry 1212 of FIG. 12 may be in one or more packages. For example, the processor circuitry 1300 of FIG. 13 and/or the FPGA circuitry 1400 of FIG.145 may be in one or more packages. In some examples, an XPU may be implemented by the processor circuitry 1212 of FIG. 12, which may be in one or more packages. For example, the XPU may include a CPU in one package, a DSP in another package, a GPU in yet another package, and an FPGA in still yet another package.

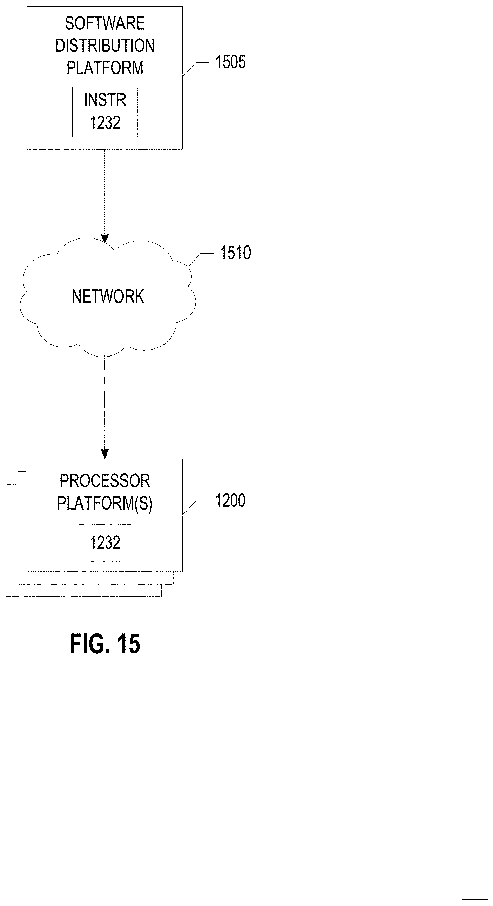

A block diagram illustrating an example software distribution platform 1505 to distribute software such as the example machine readable instructions 1232 of FIG. 12 to hardware devices owned and/or operated by third parties is illustrated in FIG. 15. The example software distribution platform 1505 may be implemented by any computer server, data facility, cloud service, etc., capable of storing and transmitting software to other computing devices. The third parties may be customers of the entity owning and/or operating the software distribution platform 1505. For example, the entity that owns and/or operates the software distribution platform 1505 may be a developer, a seller, and/or a licensor of software such as the example machine readable instructions 1232 of FIG. 12. The third parties may be consumers, users, retailers, OEMs, etc., who purchase and/or license the software for use and/or re-sale and/or sub-licensing. In the illustrated example, the software distribution platform 1505 includes one or more servers and one or more storage devices. The storage devices store the machine readable instructions 1232, which may correspond to the example machine readable instructions 900, 910, 1100 of FIGS. 9-11, as described above. The one or more servers of the example software distribution platform 1505 are in communication with a network 1510, which may correspond to any one or more of the Internet and/or any of the example networks described above. In some examples, the one or more servers are responsive to requests to transmit the software to a requesting party as part of a commercial transaction. Payment for the delivery, sale, and/or license of the software may be handled by the one or more servers of the software distribution platform and/or by a third party payment entity. The servers enable purchasers and/or licensors to download the machine readable instructions 1232 from the software distribution platform 1505. For example, the software, which may correspond to the example machine readable instructions 900, 910, 1100 of FIGS. 9-11, may be downloaded to the example processor platform 1200, which is to execute the machine readable instructions 1232 to implement the edge constellation 500. In some example, one or more servers of the software distribution platform 1505 periodically offer, transmit, and/or force updates to the software (e.g., the example machine readable instructions 1232 of FIG. 12) to ensure improvements, patches, updates, etc., are distributed and applied to the software at the end user devices.

From the foregoing, it will be appreciated that example systems, methods, apparatus, and articles of manufacture have been disclosed that attest event data generated within a constellation of edge devices. Disclosed systems, methods, apparatus, and articles of manufacture improve upon known attestation methods by attesting event data using KPI values which are trusted due to KPI sensors being implemented in a trustworthy computing architecture that makes tampering difficult. Disclosed systems, methods, apparatus, and articles of manufacture improve the efficiency of using a computing device by improving the reliability of attestation of event data generated within an edge constellation. Thus, only the reliably attested event data is further processed within the edge constellation or by observers of the edge constellation. By only processing the reliably attested event data, computing resources are not wasted by the edge constellation or an observer of the edge constellation to process potentially tampered event data. Additionally, the potentially tampered event data may be harmful (e.g., cause corruption) to any of the computing systems in the edge constellation or the observer of the edge constellation. Thus, preventing further processing of potentially tampered event data can prevent harm (e.g., corruption) to computing systems. The disclosed systems, methods, apparatus, and articles of manufacture are accordingly directed to one or more improvement(s) in the operation of a machine such as a computer or other electronic and/or mechanical device.

Example methods and apparatus to attest a constellation of edge devices are disclosed herein. Further examples and combinations thereof include the following:
Example 1 includes a first edge computing node, including at least one memory; instructions in the first edge computing node; and processor circuitry to execute the instructions to record one or more timestamps corresponding to processing of event data from a first edge computing device; transmit the event data and the one or more timestamps to a second edge computing node; and in response to the second edge computing node validating the event data based on the one or more timestamps and historical key performance indicators corresponding to the first edge computing node, validate the event data.
Example 2 includes the first edge computing node of example 1, wherein the second edge computing node is to validate the event data using a model, the model based on the historical key performance indicators corresponding to the first edge computing node.
Example 3 includes the first edge computing node of example 1, wherein the processor circuitry is to, in response to the validation of the event data, add a hash of the event data to a blockchain block.
Example 4 include the first edge computing node of example 1, wherein the processor circuitry is to, in response to the validation of the event data, transmit the event data to an observer.
Example 5 includes the first edge computing node of example 1, wherein the one or more timestamps includes a first timestamp corresponding to a start time of the processing of the event data and a second timestamp corresponding to an end time of the processing of the event data.
Example 6 includes the first edge computing node of example 1, wherein the one or more timestamps includes a timestamp corresponding to transmission of the event data.
Example 7 includes the first edge computing node of example 1, wherein the processor circuitry is to coordinate a clock time of the first edge computing node with a clock time of the first edge computing device and a clock time of the second edge computing node.
Example 8 includes the first edge computing node of example 1, wherein the key performance indicators include at least one of an event data processing key performance indicator, a data transmission key performance indicator, or a latency key performance indicator.
Example 9 includes the first edge computing node of example 1, wherein the second edge computing node is to validate the event data based on metadata corresponding to at least one of the first edge computing node or the first edge computing device.
Example 10 includes the first edge computing node of example 1, wherein the first edge computing node and the second edge computing node are contained within a single physical device.
Example 11 includes the first edge computing node of example 1, wherein the processor circuitry is to transmit the event data and the one or more timestamps to a third edge computing node; and the validation of the event data is in response to the third edge computing node validating the event data based on the one or more timestamps and historical key performance indicators corresponding to the first edge computing node.
Example 12 includes the first edge computing node of example 11, wherein the at least one memory includes a configuration of an edge constellation, the edge constellation includes the first edge computing node, the second edge computing node, and the third edge computing node.
Example 13 includes at least one non-transitory computer readable storage medium comprising instructions that, when executed, cause processor circuitry to at least record one or more timestamps corresponding to processing of event data from a first edge computing device; transmit the event data and the one or more timestamps to a second edge computing node; and in response to the second edge computing node validating the event data based on the one or more timestamps and historical key performance indicators corresponding to a first edge computing node, validate the event data.
Example 14 includes the at least one non-transitory computer readable storage medium of example 13, wherein the second edge computing node is to validate the event data using a model, the model based on the historical key performance indicators corresponding to the first edge computing node.
Example 15 includes the at least one non-transitory computer readable storage medium of example 13, wherein the instructions, when executed, cause the processor circuitry to, in response to the validation of the event data, add a hash of the event data to a blockchain block.
Example 16 includes the at least one non-transitory computer readable storage medium of example 13, wherein the instructions, when executed, cause the processor circuitry to, in response to the validation of the event data, transmit the event data to an observer.
Example 17 includes the at least one non-transitory computer readable storage medium of example 13, wherein the one or more timestamps includes a first timestamp corresponding to a start time of the processing of the event data and a second timestamp corresponding to an end time of the processing of the event data.
Example 18 includes the at least one non-transitory computer readable storage medium of example 13, wherein the one or more timestamps includes a timestamp corresponding to transmission of the event data.
Example 19 includes the at least one non-transitory computer readable storage medium of example 13, wherein the instructions, when executed, cause the processor circuitry to coordinate a clock time of the first edge computing node with a clock time of the first edge computing device and a clock time of the second edge computing node.
Example 20 includes the at least one non-transitory computer readable storage medium of example 13, wherein the key performance indicators include at least one of an event data processing key performance indicator, a data transmission key performance indicator, or a latency key performance indicator.
Example 21 includes the at least one non-transitory computer readable storage medium of example 13, wherein the second edge computing node is to validate the event data based on metadata corresponding to at least one of the first edge computing node or the first edge computing device.
Example 22 includes the at least one non-transitory computer readable storage medium of example 13, wherein the first edge computing node and the second edge computing node are contained within a single physical device.
Example 23 includes the at least one non-transitory computer readable storage medium of example 13, wherein the instructions, when executed, cause the processor circuitry to transmit the event data and the one or more timestamps to a third edge computing node; and the validation of the event data is in response to the third edge computing node validating the event data based on the one or more timestamps and historical key performance indicators corresponding to the first edge computing node.
Example 24 includes the at least one non-transitory computer readable storage medium of example 23, further including at least one memory including a configuration of an edge constellation, the edge constellation includes the first edge computing node, the second edge computing node, and the third edge computing node.
Example 25 includes a first edge computing node, including means for recording one or more timestamps corresponding to processing of event data from a first edge computing device; means for transmitting the event data and the one or more timestamps to a second edge computing node; and means for validating the event data in response to the second edge computing node validating the event data based on the one or more timestamps and historical key performance indicators corresponding to the first edge computing node.
Example 26 includes the first edge computing node of example 25, wherein the second edge computing node is to validate the event data using a model, the model based on the historical key performance indicators corresponding to the first edge computing node.
Example 27 includes the first edge computing node of example 25, further including means for adding the event data to a blockchain block in response to the validation of the event data.
Example 28 includes the first edge computing node of example 25, wherein the transmitting means is to transmit the event data to an observer in response to the validation of the event data.
Example 29 includes the first edge computing node of example 25, wherein the one or more timestamps includes a first timestamp corresponding to a start time of the processing of the event data and a second timestamp corresponding to an end time of the processing of the event data.
Example 30 includes the first edge computing node of example 25, wherein the one or more timestamps includes a timestamp corresponding to transmission of the event data.
Example 31 includes the first edge computing node of example 25, further including means for coordinating a clock time of the first edge computing node with a clock time of the first edge computing device and a clock time of the second edge computing node.
Example 32 includes the first edge computing node of example 25, wherein the key performance indicators include at least one of an event data processing key performance indicator, a data transmission key performance indicator, or a latency key performance indicator.
Example 33 includes the first edge computing node of example 25, wherein the second edge computing node is to validate the event data based on metadata corresponding to at least one of the first edge computing node or the first edge computing device.
Example 34 includes the first edge computing node of example 25, wherein the first edge computing node and the second edge computing node are contained within a single physical device.
Example 35 includes the first edge computing node of example 25, wherein the transmitting means is to transmit the event data and the one or more timestamps to a third edge computing node and the validating means is to validate the event data is in response to the third edge computing node validating the event data based on the one or more timestamps and historical key performance indicators corresponding to the first edge computing node.
Example 36 includes the first edge computing node of example 35, further including means for storing data including a configuration of an edge constellation, the edge constellation includes the first edge computing node, the second edge computing node, and the third edge computing node.
Example 37 includes a first edge computing node including interface circuitry to access event data; and processor circuitry including one or more of at least one of a central processing unit, a graphic processing unit, or a digital signal processor, the at least one of the central processing unit, the graphic processing unit, or the digital signal processor having control circuitry to control data movement within the processor circuitry, arithmetic and logic circuitry to perform one or more first operations corresponding to instructions, and one or more registers to store a result of the one or more first operations, the instructions in the first edge computing node; a Field Programmable Gate Array (FPGA), the FPGA including logic gate circuitry, a plurality of configurable interconnections, and storage circuitry, the logic gate circuitry and interconnections to perform one or more second operations, the storage circuitry to store a result of the one or more second operations; or Application Specific Integrate Circuitry (ASIC) including logic gate circuitry to perform one or more third operations; the processor circuitry to perform at least one of the first operations, the second operations, or the third operations to instantiate: timestamp handler circuitry to record one or more timestamps corresponding to processing of the event data from a first edge computing device; and request logic circuitry to: transmit the event data and the one or more timestamps to a second edge computing node; and validate the event data in response to the second edge computing node validating the event data based on the one or more timestamps and historical key performance indicators corresponding to the first edge computing node.
Example 38 includes the first edge computing node of example 37, wherein the processor circuitry is to, in response to the validation of the event data, add a hash of the event data to a blockchain block.

Although certain example systems, methods, apparatus, and articles of manufacture have been disclosed herein, the scope of coverage of this patent is not limited thereto. On the contrary, this patent covers all systems, methods, apparatus, and articles of manufacture fairly falling within the scope of the claims of this patent.

## Claims

1. A first edge computing node, comprising:
at least one memory;
instructions in the first edge computing node; and
processor circuitry to execute the instructions to:
record one or more timestamps corresponding to processing of event data from a first edge computing device;
transmit the event data and the one or more timestamps to a second edge computing node; and
in response to the second edge computing node validating the event data based on the one or more timestamps and historical key performance indicators corresponding to the first edge computing node, validate the event data.

2. The first edge computing node of claim 1, wherein the second edge computing node is to validate the event data using a model, the model based on the historical key performance indicators corresponding to the first edge computing node.

3. The first edge computing node of any of claims 1 or 2, wherein the processor circuitry is to, in response to the validation of the event data, add a hash of the event data to a blockchain block.

4. The first edge computing node of any of claims 1-3, wherein the processor circuitry is to, in response to the validation of the event data, transmit the event data to an observer.

5. The first edge computing node of any of claims 1-4, wherein the one or more timestamps includes a first timestamp corresponding to a start time of the processing of the event data and a second timestamp corresponding to an end time of the processing of the event data.

6. The first edge computing node of any of claims 1-5, wherein the one or more timestamps includes a timestamp corresponding to transmission of the event data.

7. The first edge computing node of claim 1, wherein the processor circuitry is to coordinate a clock time of the first edge computing node with a clock time of the first edge computing device and a clock time of the second edge computing node.

8. A method comprising:
recording one or more timestamps corresponding to processing of event data from a first edge computing device;
transmitting the event data and the one or more timestamps to a second edge computing node; and
in response to the second edge computing node validating the event data based on the one or more timestamps and historical key performance indicators corresponding to a first edge computing node, validating the event data.

9. The method of claim 8, including at least one of: adding a hash of the event data to a blockchain block; and/or in response to validating the event data, transmitting the event data to an observer.

10. The method of any of claims 8-9, including the key performance indicators including at least one of an event data processing key performance indicator, a data transmission key performance indicator, or a latency key performance indicator.

11. The method of any of claims 8-10, including the second edge computing node validating the event data based on metadata corresponding to at least one of the first edge computing node or the first edge computing device.

12. The method of any of claims 8-11, including the first edge computing node and the second edge computing node contained within a single physical device.

13. The method of any of claims 8-12, including at least one of:
transmitting the event data and the one or more timestamps to a third edge computing node; and/or
the validation of the event data is in response to the third edge computing node validating the event data based on the one or more timestamps and historical key performance indicators corresponding to the first edge computing node.

14. The method of any of claims 8-13, including a configuration of an edge constellation, the edge constellation including the first edge computing node, the second edge computing node, and the third edge computing node.

15. Machine-readable storage including machine-readable instructions, when executed, to realize the apparatus as claimed in any one of claims 1 to 7, or perform the method of any one of claims 8 to 14.
